# EUROPEAN PATENT SPECIFICATION

(11) **EP 3 866 044 B1**
(45) Date of publication and mention of the grant of the patent: **24.05.2023**
(21) Application number: 21178545.6
(22) Date of filing: 09.06.2021
(51) Int. Cl.: G06F 30/15, G01M 17/007

(54) **ROAD TEST METHOD AND APPARATUS FOR AUTONOMOUS DRIVING VEHICLE, DEVICE AND STORAGE MEDIUM**
VERFAHREN UND VORRICHTUNG FÜR STRASSENTEST FÜR AUTONOM FAHRENDE FAHRZEUGE, VORRICHTUNG UND SPEICHERMEDIUM
MÉTHODE ET APPAREIL DE TEST ROUTIER POUR VÉHICULE À CONDUITE AUTONOME, DISPOSITIF ET SUPPORT DE STOCKAGE

(30) Priority: 10.12.2020 CN 202011436678
(43) Date of publication of application: 18.08.2021
(73) Proprietor: BEIJING BAIDU NETCOM SCIENCE TECHNOLOGY CO., LTD., Beijing 100085 (CN)
(72) Inventor: ZHAO, Jun, Beijing, China (CN)
(74) Representative: J A Kemp LLP

(56) References cited:
- CN-A- 107 782 564
- CN-A- 111 765 903
- US-A1- 2019 145 860

## Description

### □ TECHNICAL FIELD

The present application relates to the field of artificial intelligence, in particular, to autonomous driving and intelligent transportation technologies, and in particular to a road test method and apparatus for an autonomous driving vehicle, a device and a storage medium.

### BACKGROUND

A road test is a test stage where an autonomous driving vehicle behaves most close as in a scenario with practical requirements, where interactions with actual pedestrians and vehicles are conducted in an open road network to test a travelling experience on a real road with respect to the autonomous driving vehicle, and the road test is a comprehensive test on safety, comfort, intelligence and travelling efficiency of the autonomous driving vehicle, where scenarios as many as possible can be covered by covering different traffic throughputs and different traffic flows.

Currently, regarding a road test for an autonomous driving vehicle, a performance of a tested version is fed back by a questionnaire submitted by a road test engineer. The road test engineer, when observing an overall performance of the tested version from a perspective of finding problems, can be easily affected by seriousness of a problem and submits incomprehensive subjective conclusions such as "not feel so good", "just OK" and "quite good", rather than a comprehensive and quantitative road test result, therefore cannot objectively evaluate the performance of the current autonomous driving system version.

CN 107782564 A discloses that, before an onsite driving test, a test route is indicated to a vehicle; during the onsite driving test, the vehicle drives on the test route and feeds back driving test result data; and a driving test result report is determined based on test route data indicating the test route and the test result data fed back by the vehicle.

US 2019/145860 A1 discloses a method for autonomous system performance metric generation and benchmarking, according to which a control data indicative of a driver performance is received, and the driver performance is graded based on the control data, where the control data may be generated in response to a human driver performance or an autonomous driving control system performance.

CN 111765 903 A discloses a solution to determine a mileage required for a road test according to a corresponding relationship between a mileage and a ratio between a current number of accumulated problems monitored in a testing process and a total number of problems monitored in the testing process.

### SUMMARY

The present invention is set out in the appended set of claims. The present application provides a road test method and apparatus for an autonomous driving vehicle, a device and a storage medium.

According to a first aspect, the present application provides a road test method for an autonomous driving vehicle, including:
acquiring autonomous driving scenarios, information of test parameters corresponding to the autonomous driving scenarios and experience evaluation data in a process during which a vehicle is travelling along a test route, where different autonomous driving scenarios correspond to different test parameters;
analyzing the information of the test parameters corresponding to the autonomous driving scenarios according to evaluation baselines corresponding to the autonomous driving scenarios, to determine a first test result of the vehicle;
generating a second test result according to the experience evaluation data; and
determining a road test result of the vehicle according to the first test result and the second test result of the vehicle.

According to a second aspect, the present application provides a road test apparatus for an autonomous driving vehicle, including:
a road test data processing module, configured to acquire autonomous driving scenarios, information of test parameters corresponding to the autonomous driving scenarios and experience evaluation data in a process during which a vehicle is travelling along a test route, where different autonomous driving scenarios correspond to different test parameters;
an objective testing module, configured to analyze the information of the test parameters corresponding to the autonomous driving scenarios according to evaluation baselines corresponding to the autonomous driving scenarios, to determine a first test result of the vehicle;
a subjective testing module, configured to generate a second test result according to the experience evaluation data; and
a comprehensive testing module, configured to determine a road test result of the vehicle according to the first test result and the second test result of the vehicle.

According to a third aspect, the present application provides an electronic device, including:
at least one processor; and
a memory communicatively connected with the at least one processor; where
the memory stores thereon instructions executable by the at least one processor; and the instructions, when being executed by the at least one processor, cause the at least one processor to implement the method described in the above.

According to a fourth aspect, the present application provides a non-transitory computer readable storage medium, storing thereon computer instructions which are configured to cause a computer to implement the method described in the above.

According to a fifth aspect, the present application provides a computer program product, including a computer program which, when being executed by a processor, implements the method described in the above.

According to a sixth aspect, the present application provides a computer program, the computer program is stored in a computer-readable storage medium, when being executed by a processor, implements the method described in the above.

The technology according to the present application improves an accuracy of a road test result of an autonomous driving vehicle.

Other features of the present application will be more intelligible based on the following description.

### BRIEF DESCRIPTION OF DRAWINGS

The appended drawings are for better understanding of the solution and do not constitute a limitation of the present application, where:
FIG. 1 is a schematic diagram of a road test scenario for an autonomous driving vehicle where the embodiments of the present application may be applied;
FIG. 2 is a flowchart of a road test method for an autonomous driving vehicle according to a first embodiment of the present application;
FIG. 3 is a flowchart of a road test method for an autonomous driving vehicle according to a second embodiment of the present application;
FIG. 4 is a schematic diagram of a road test apparatus for an autonomous driving vehicle according to a third embodiment of the present application; and
FIG. 5 is a schematic diagram of an electronic device configured to implement the road test method for an autonomous driving vehicle of the present application.

### DESCRIPTION OF EMBODIMENTS

Exemplary embodiments of the present application are explained hereinafter in conjunction with the accompanying drawings, various technical details included in which are for the purpose of understanding, which should be considered as being exemplary. Additionally, commonly known functions and structures are omitted from the following description for clarity and conciseness.

The present application provides a road test method and apparatus for an autonomous driving vehicle, a device and a storage medium, which are applied to the field of artificial intelligence and, in particular, to autonomous driving and intelligent transportation technologies, to achieve a technical effect of improving an accuracy of a road test result of an autonomous driving vehicle.

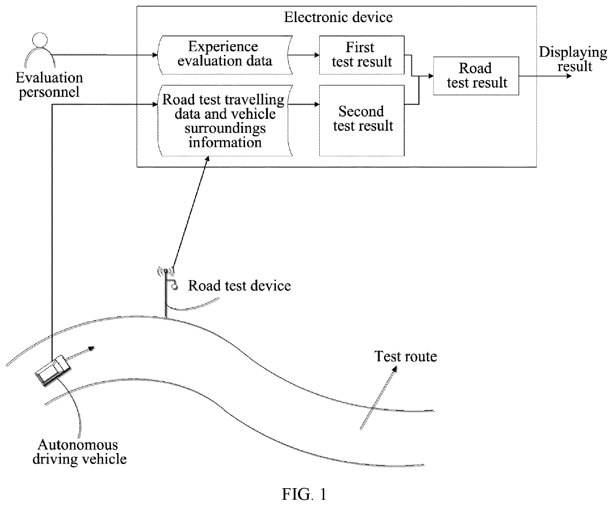

The road test method for an autonomous driving vehicle provided in embodiments of the present application may be applied to a road test scenario for an autonomous driving vehicle shown in FIG. 1. The vehicle shown in FIG. 1 is a to-be-test autonomous driving vehicle, and the electronic device is a device to execute the road test method for an autonomous driving vehicle. In a process of a road test for an autonomous driving vehicle, a to-be-test vehicle loaded with an evaluation personnel acquires, from another vehicle, a road side device or a server, road test travelling data and vehicle surroundings information of the vehicle in a process while travelling along a test route. After the road test, the evaluation personnel submits experience evaluation data based on an actual travelling experience in the process during which the vehicle is travelling along the test route. The electronic device evaluates an autonomous driving ability of the vehicle to obtain a first test result, according to objective test data such as the road test travelling data of the vehicle and the vehicle surroundings information; evaluates an autonomous driving ability of the vehicle to obtain a second test result, according to subjective evaluation data such as the experience evaluation data based on subjective feelings of the evaluation personnel; and obtains a road test result of the vehicle by combining the first test result and the second test result. In this way, the road test result of the vehicle includes an objective test result based on objective test data such that rigorousness and preciseness of the road test of the vehicle are guaranteed, besides, the road test result of the vehicle also includes a quantitative test result based on subjective experience evaluation data, which reflects an evaluation result on travelling safety, comfort and intelligence and travelling efficiency of a vehicle from a subjective perspective of a passenger, thereby a more comprehensive road test result is obtained, and an overall performance of an autonomous driving vehicle in the road test is evaluated more accurately, such that the accuracy of a road test result of an autonomous driving vehicle is improved.

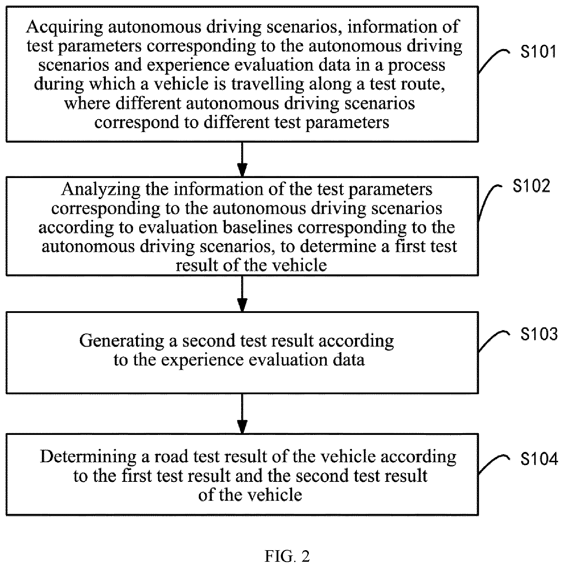

FIG. 2 is a flowchart of a road test method for an autonomous driving vehicle according to a first embodiment of the present application. As shown in FIG. 2, the specific steps of the method are as the following:
S101: acquiring autonomous driving scenarios, information of test parameters corresponding to the autonomous driving scenarios and experience evaluation data in a process during which a vehicle is travelling along a test route, where different autonomous driving scenarios correspond to different test parameters.

Where the autonomous driving scenario in the process during which the vehicle is travelling along the test route includes but not limited to: travelling to follow, travelling straight, switching a lane, travelling through an intersection, cutting in or cutting out, identifying and coping with a close obstacle, turning around, merging into traffic, intelligent nudge, travelling through a main/side road, pulling over, starting up.

For the purpose of an objective evaluation on an autonomous driving ability corresponding to various autonomous driving scenarios, which is applied in the travelling process of an autonomous driving vehicle, in the embodiment, one or more test parameters corresponding to each autonomous driving scenario are predetermined, the test parameters are indicative of evaluating whether an autonomous driving behavior of a vehicle in an autonomous driving scenario meets a requirement. The parameters corresponding to different autonomous driving scenarios are different.

The information of the test parameters corresponding to the autonomous driving scenario includes values of the test parameters corresponding to the autonomous driving scenario.

In the embodiment, the experience evaluation data is: evaluation data on coping abilities corresponding to the autonomous driving scenarios in a travelling process of the vehicle, where the evaluation data is submitted by an evaluation personnel who rides in the vehicle based on an actual travelling experience in the travelling process of the vehicle in the process during which the vehicle is travelling along the test route.

S102: analyzing the information of the test parameters corresponding to the autonomous driving scenarios according to evaluation baselines corresponding to the autonomous driving scenarios, to determine a first test result of the vehicle.

Where the evaluation baselines corresponding to the autonomous driving scenarios are used for determining whether the test parameters corresponding to the autonomous driving scenarios meet a requirement.

The information of the test parameters corresponding to the autonomous driving scenarios is analyzed according to the evaluation baselines corresponding to the autonomous driving scenarios to determine the first test result of the vehicle. The first test result is an objective, rigorous and precise test result obtained based on objective test data.

S 103: generating a second test result according to the experience evaluation data.

In the embodiment, based on the subjective experience evaluation data submitted by multiple professional evaluation personnels, in combination with severity levels at which the autonomous driving scenarios influence an autonomous driving effect of the vehicle, and the evaluation baselines, the experience evaluation data corresponding to the autonomous driving scenarios is subjected to a quantitation process to obtain the second test result. The second test result is a test result on a travelling experience on the vehicle, which reflects a subjective evaluation result of a passenger on travelling safety, comfort and intelligence and travelling efficiency of the vehicle.

S104: determining a road test result of the vehicle according to the first test result and the second test result of the vehicle.

When the first test result and the second test result of the vehicle are obtained, the road test result of the vehicle is determined by combining the first test result and the second test result.

Optionally, weights of the first test result based on objective data and the second test result based on subjective data may be assigned, such that a weighted sum of the first test result and the second test result is calculated as the road test result of the vehicle.

Additionally, a sum of the first test result based on objective data and the second test result based on subjective data may serve as the road test result of the vehicle; or an eventual road test result may be determined according to the first test result and the second test result through other methods, which are not specifically limited herein.

According to the embodiment of the present application, autonomous driving scenarios and information of test parameters corresponding to the autonomous driving scenarios in a process during which a vehicle is travelling along a test route are acquired, the information of the test parameters corresponding to the autonomous driving scenario is analyzed according to evaluation baselines corresponding to the autonomous driving scenarios, to determine a first test result of the vehicle, that is, the first test result is obtained by evaluating an autonomous driving ability of the vehicle according to objective test data such as the information of the test parameters corresponding to the autonomous driving scenarios; a second test result is obtained by evaluating an autonomous driving ability of the vehicle from a travelling experience perspective of an evaluation personnel according to subjective evaluation data such as experience evaluation data; and a road test result of the vehicle is obtained by combining the first test result and the second test result. In this way, the road test result of the vehicle includes an objective test result based on objective test data such that objectivity, rigorousness and preciseness of the road test of the vehicle are guaranteed, besides, the road test result of the vehicle also includes a quantitative test result based on subjective experience evaluation data, which reflects an evaluation result on travelling safety, comfort and intelligence and travelling efficiency of a vehicle from a subjective travelling experience perspective of a passenger, thereby a more comprehensive road test result is obtained, and an overall performance of an autonomous driving vehicle in the road test is evaluated more accurately, such that the accuracy of a road test result of an autonomous driving vehicle is improved.

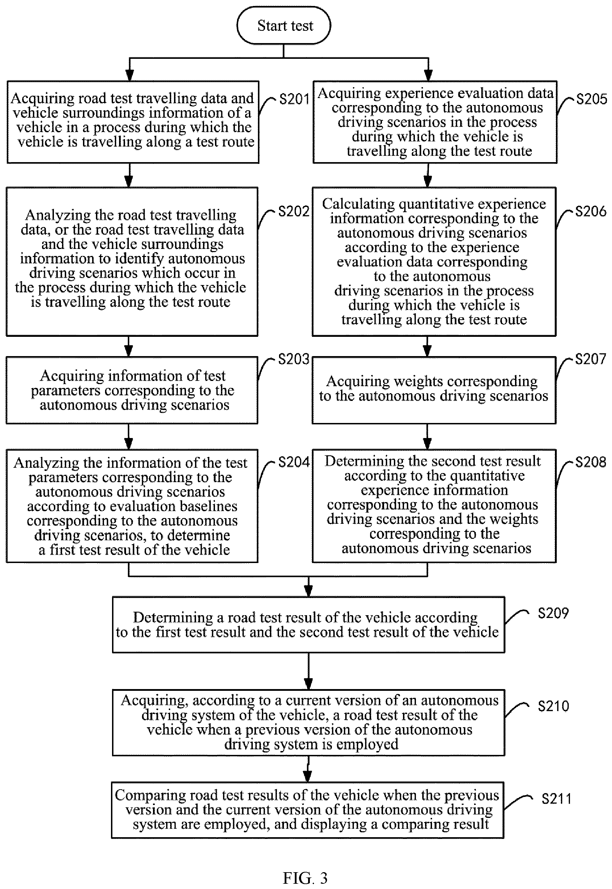

FIG. 3 is a flowchart of a road test method for an autonomous driving vehicle according to a second embodiment of the present application. Based on the foregoing first embodiment, the road test method for an autonomous driving vehicle includes a test section based on subjective evaluation data, and a test section based on objective road test travelling data and vehicle surroundings information, in the embodiment, the road test method for the autonomous driving vehicle is explained in detail in conjunction with FIG. 3. As shown in FIG. 3, steps S201-S204 are the test section based on objective road test travelling data and vehicle surroundings information, steps S205-S208 are the test section based on subjective evaluation data.

As shown in FIG. 3, the specific steps of the method are as follows:
Step S201, acquiring road test travelling data and vehicle surroundings information of a vehicle in a process during which the vehicle is travelling along a test route.

In a practical application, for a purpose of conducting a comprehensive and objective evaluation on a version of an autonomous driving vehicle, several principles should be followed: the first is to fix an evaluation personnel, regarding road tests to different versions of an autonomous driving system, a fixed evaluation personnel is selected for testing, and a baseline for subjective evaluation is established through an one-time experience or evaluation. The second is to fix a road test period or to follow up the vehicle for a long time for testing, since scenario complexities will be different due to different road test traffic flows in different periods of every week or different periods of a day, and an accuracy can be easily affected for autonomous driving vehicle tests under two scenarios with a huge difficulty gap. The third is to fix a test route. An autonomous driving ability of an autonomous driving vehicle required to carry out left/right turning, necessary lane switching, turning around is basically guaranteed to be the same under the same test route, while different test routes require different autonomous driving abilities, which may result in an accuracy problem. A test route is planned in advance, finally, one or more test routes are determined. Where in the process during which an autonomous driving vehicle is travelling along the test route, all autonomous driving scenarios that need to be tested should be covered.

In the embodiment, the road test travelling data includes: vehicle travelling data in the process during which the autonomous driving vehicle is travelling along the test route, which includes vehicle controlling information and vehicle travelling behavior information or the like. Where the vehicle controlling information refers to instruction information for controlling the autonomous driving vehicle to travel, for example a starting up instruction, a pulling over instruction, a lane switching instruction, a turning around instruction, acceleration/deceleration instruction sent by a controlling system or the like. The vehicle travelling behavior information includes data relates to a vehicle behavior, such as a travelling speed, an acceleration, an orientation angle or a travelling trajectory of the autonomous driving vehicle in the travelling process.

The vehicle surroundings information is data of a surrounding environment of the vehicle in the process during which the autonomous driving vehicle is travelling along the test route. The vehicle surroundings information includes one or more of the following: a distance between the vehicle and a vehicle in front, information of a lane on which the vehicle is travelling, intersection information of an intersection to which the vehicle is travelling, information of traffic around the vehicle.

Step S202, analyzing the road test travelling data, or the road test travelling data and the vehicle surroundings information to identify autonomous driving scenarios which occur in the process during which the vehicle is travelling along the test route.

The road test travelling data and the vehicle surroundings information of the vehicle, which are recorded in the processing during which the vehicle is travelling along the test route, are subjective data that can affect or inflect autonomous driving behaviors of the autonomous driving vehicle. Based on the subjective data, autonomous driving scenarios which occur in the process during which the vehicle is travelling along the test route can be identified.

In a possible implementation, the following manner may be employed to identify the autonomous driving scenarios which occur in the process during which the vehicle is travelling along the test route: analyzing vehicle controlling information in the road test travelling data; determining that one of the autonomous driving scenarios occurs in the process during which the vehicle is travelling along the test route, if the vehicle controlling information includes controlling information corresponding to the one of the autonomous driving scenarios.

Exemplarily, the road test travelling data may include a controlling log of the vehicle where controlling information of the vehicle is recorded. The controlling information of the vehicle can be acquired by analyzing the controlling log of the vehicle.

In a practical application, with respect to different autonomous driving scenarios, driving behaviors of a vehicle corresponding to the autonomous driving scenarios are carried out under the control of one or more controlling instructions sent out by a controlling system. Controlling instructions corresponding to different autonomous driving scenarios are not entirely the same, some autonomous driving scenarios even have controlling instructions that are specific (unique) to these autonomous driving scenarios. Therefore, an autonomous driving scenario can be identified according to a controlling instruction. Autonomous driving scenarios which occur in the process during which the vehicle is travelling along the test route can be accurately identified through controlling information obtained from analysis.

For example, a controlling log generated by an autonomous driving vehicle in a travelling process is analyzed, it is found that a lane switching instruction is sent out, then it is determined that a lane switching scenario occurs at the time when the lane switching instruction is sent out by the controlling system.

In another possible implementation, the following manner may be employed to identify the autonomous driving scenarios which occur in the process during which the vehicle is travelling along the test route:
analyzing the road test travelling data and the vehicle surroundings information to acquire a behavior characteristic of the vehicle; according to the behavior characteristic of the vehicle, if the vehicle has a behavior characteristic of one of the autonomous driving scenario, then determining that the one of the autonomous driving scenarios occurs in the process during which the vehicle is travelling along the test route.

In a practical application, with respect to different autonomous driving scenarios, driving behaviors of a vehicle corresponding to the autonomous driving scenarios have different characteristics, some autonomous driving scenarios even have driving behaviors that are specific to the autonomous driving scenarios. Behavior characteristics of a vehicle can be identified by analyzing vehicle travelling behavior information in the road test travelling data, and the vehicle surroundings information. If the vehicle has behavior characteristics of a certain autonomous driving scenario, then it is determined that the vehicle is met with the autonomous driving scenario. The time when the vehicle represents these behavior characteristics, is the time when the vehicle is met with the corresponding autonomous driving scenario. The autonomous driving scenarios occurring in the process during which the vehicle is travelling along the test route can be identified accurately by analyzing behavior characteristics of the vehicle.

For example, by analyzing the vehicle travelling behavior information in the road test travelling data, and the vehicle surroundings information, if it is determined that the autonomous driving vehicle moves from a lane to an adjacent lane at a certain spot, meanwhile, an orientation angle of the autonomous driving vehicle changes accordingly, then it is determined that the vehicle is met with a scenario of switching a lane.

Step S203, acquiring information of test parameters corresponding to the autonomous driving scenarios.

For the purpose of an objective evaluation on an autonomous driving ability in various autonomous driving scenarios in the travelling process of an autonomous driving vehicle, in the embodiment, one or more test parameters corresponding to each autonomous driving scenario are predetermined, the test parameters are indicative of evaluating whether an autonomous driving behavior of a vehicle in an autonomous driving scenario meets a requirement. The parameters corresponding to different autonomous driving scenarios are different.

After identifying the autonomous driving scenarios which occur in the process during which the vehicle is travelling along the test route, acquiring the information of the test parameter corresponding to each of the autonomous driving scenarios. Where the information of the test parameters corresponding to the autonomous driving scenario includes values of the test parameters corresponding to the autonomous driving scenario.

Exemplarily, the following manner may be employed to acquire the information of the test parameter(s) corresponding to any one of the autonomous driving scenarios:
determining an occurrence time of the autonomous driving scenario; acquiring, from the road test travelling data and the vehicle surroundings information, an actual value(s) of the test parameter(s) corresponding to the autonomous driving scenario at the occurrence time. In this way, the information of the test parameter(s) corresponding to the autonomous driving scenario is acquired accurately based on the occurrence time of the autonomous driving scenario.

For example, test parameters corresponding to a scenario of switching a lane may include: a time to collision (TTC) at the rear when switching a lane, a TTC at the front when switching a lane, a vehicle speed when switching a lane. At the time when an occurrence time of the scenario of switching a lane is determined, a TTC at the rear, a TTC at the front and a speed of the vehicle at the occurrence time of the scenario of switching a lane are acquired from the road test travelling data, so as to determine the information of the test parameters corresponding to the scenario of switching a lane. The test parameters corresponding to the scenario of switching a lane provided in the example are merely for illustrative purposes, the test parameters corresponding to the scenario of switching a lane may further include a highest speed, an average speed or the like during a process of switching a lane, or further include other parameters that are not specified herein, which are not specifically limited herein.

In the embodiment, test parameters corresponding to the autonomous driving scenarios may be configured according to a practical application scenario, for road tests of multiple versions of an autonomous driving vehicle, the test parameters corresponding to the autonomous driving scenarios are not specifically limited herein.

Through the above steps S202-S203, the autonomous driving scenarios, the information of the test parameters corresponding to the autonomous driving scenarios in the process during which the vehicle is travelling along the test route are acquired to provide subjective data for a road test of the vehicle, based on which the road test of the vehicle may be carried out subjectively, thereby improving objectivity and accuracy of a road test result of the autonomous driving vehicle.

Step S204, analyzing the information of the test parameters corresponding to the autonomous driving scenarios according to evaluation baselines corresponding to the autonomous driving scenarios, to determine a first test result of the vehicle.

Where the information of the test parameters corresponding to the autonomous driving scenarios includes actual values of the test parameters corresponding to the autonomous driving scenarios, the evaluation baselines corresponding to the autonomous driving scenarios include baseline ranges of the test parameters corresponding to the autonomous driving scenarios.

The evaluation baselines corresponding to the autonomous driving scenarios are used for determining whether the test parameters corresponding to the autonomous driving scenarios meet a requirement. Regarding a certain test parameter corresponding to a certain autonomous driving scenario, if an actual value of the test parameter is within a corresponding baseline range, then it is indicated that the test parameter meets a requirement, if the actual value of the test parameter is not within the corresponding baseline range, then it is indicated that the test parameter does not meet the requirement.

Additionally, in order to improve an accuracy of the first test result, the evaluation baselines corresponding to the autonomous driving scenarios are obtained according to analysis and statistics of driving data of a standard human driver.

Exemplarily, the step may be specifically implemented in the following manner:
determining test parameters whose actual values are within corresponding baseline ranges according to the actual values of the test parameters corresponding to the autonomous driving scenarios and the baseline ranges of the test parameters corresponding to the autonomous driving scenarios; and determining a sum of evaluation values corresponding to the test parameters whose actual values are within corresponding baseline ranges as the first test result of the vehicle; where each of the test parameters corresponding to each of the autonomous driving scenarios corresponds to an evaluation value. Thereby, all of information of test parameters corresponding to all of the autonomous driving scenarios are combined for evaluating an autonomous driving ability of an autonomous driving vehicle effectively and objectively.

Exemplarily, a score deducting method may be employed: setting a total evaluation value of a road test, an evaluation value of each autonomous driving scenario, and an evaluation value of each test parameter corresponding to an autonomous driving scenario. Where a sum of evaluation values of all of the autonomous driving scenarios equals to the total evaluation value of a road test, a sum of evaluation values of test parameters corresponding to an autonomous driving scenario equals to the evaluation value of the autonomous driving scenario. With respect to test parameters corresponding to a respective autonomous driving scenario, an evaluation value of a test parameter is deducted if the test parameter does not meet a requirement, when evaluation values of all of test parameters that do not meet a requirement are deducted, the left evaluation value of a road test is the first test result. Where evaluation values corresponding to different autonomous driving scenarios may be different, evaluation values of different test parameters corresponding to the same autonomous driving scenario may also be different.

For example, a score deducting method may be employed: assuming that a total score of a road test of a vehicle is 100 points, 10 autonomous driving scenarios are tested, and a full score for each of the autonomous driving scenarios is 10 points, there are 5 parameters corresponding to a scenario of switching a lane where each of the parameters takes 2 points. If an actual value of one of the parameters is not within a corresponding baseline range, then 2 points are deducted from the total score of a road test. When evaluation values of all of test parameters that do not meet a requirement are deducted, the left evaluation value of a road test is the first test result.

The above steps S202-S204 achieves the effects that an objective test result of a vehicle in a road test which is based on objective test data is obtained, and objectivity, rigorousness and preciseness of the road test of the vehicle are guaranteed by: acquiring road test travelling data in the process during which the vehicle is travelling along the test route; analyzing the road test travelling data, or the road test travelling data and the vehicle surroundings information to identify autonomous driving scenarios which occur in the process during which the vehicle is travelling along the test route; and acquiring the information of the test parameters corresponding to the autonomous driving scenarios; determining test parameters whose actual values are within corresponding baseline ranges according to the actual values of the test parameters corresponding to the autonomous driving scenarios and the baseline ranges of the test parameters corresponding to the autonomous driving scenarios; and determining a sum of evaluation values corresponding to the test parameters whose actual values are within corresponding baseline ranges as the first test result of the vehicle.

Step S205, acquiring experience evaluation data corresponding to the autonomous driving scenarios in the process during which the vehicle is travelling along the test route.

Where the experience evaluation data is: evaluation data on coping abilities corresponding to the autonomous driving scenarios in a travelling process of the vehicle, where the evaluation data is submitted by an evaluation personnel who rides in the vehicle based on an actual travelling experience in the travelling process of the vehicle in the process during which the vehicle is travelling along the test route.

In the embodiment, a membership theory of fuzzy mathematics can be employed to transform a qualitative problem into a quantitative problem. Based on an intuitive experience in the process during which a vehicle is travelling along a test route, and a test result of a previous version, an evaluation personnel evaluates an autonomous ability under each of the autonomous driving scenarios according to evaluation factors corresponding to the respective autonomous driving scenario, and submits the experience evaluation data.

Optionally, regarding any one of the autonomous driving scenarios, experience evaluation data corresponding to the one of the autonomous driving scenarios includes evaluation levels corresponding to the one of the autonomous driving scenarios, where different evaluation levels correspond to different quantitative information. Where the number of the evaluation levels and quantitative information corresponding to each of the evaluation levels may be set according to a practical application scenario, which are not specifically limited herein.

For example, in the experience evaluation data, each of the autonomous driving scenarios corresponds to the following 5 evaluation levels: good, quite good, average, bad, quite bad, quantitative information corresponding to the 5 evaluation levels are: 1.0, 0.8, 0.6, 0.4 and 0.2.

In a possible implementation, the step may be implemented in the following manner:
sending an evaluation factor corresponding to a respective autonomous driving scenario to multiple experience evaluation terminals; receiving experience evaluation data corresponding to the respective autonomous driving scenario, the experience evaluation data being collected based on the evaluation factor in the process during which the vehicle is travelling along the test route and submitted by the multiple experience evaluation terminals.

Thereby, a subject evaluation is carried out by an evaluation personnel with reference to unified evaluation factors, such that evaluation data usability is achieved; additionally, the experience evaluation data is submitted directly by the experience evaluation terminals, compared with a manner of submitting a paper questionnaire, the efficiency is improved.

For example, the evaluation factors corresponding to the autonomous driving scenarios may be shown in the following table:

**Table 1**

| No. | Autonomous driving scenario | Evaluation factor |
|---|---|---|
| 1 | Travelling to follow | Whether a following distance is reasonable, whether it will overtake a low-speed obstacle vehicle |
| 2 | Travelling straight | Whether braking for no reason, braking unreasonably, driving abruptly |
| 3 | Switching a lane | Whether a switching decision is hesitant, whether failing to switch when it is permitted, switching for no reason |
| 4 | Travelling through an intersection | Whether there is any hesitation, indecision, unreasonable braking and collision risk |
| 5 | Coping with cutting in or cutting out | Whether a deceleration is too fierce, whether there is any collision risk |
| 6 | Identifying and coping with a close obstacle | Whether a yielding distance is too long or short, whether slowing down unreasonably |
| 7 | Turning around | Whether failing to turn around at some intersections, resulting in detours, whether a lane selection is reasonable |
| 8 | Merging into traffic | Whether failing to merge often, whether there is a collision risk at a merging spot |
| 9 | Intelligent nudge | Whether failing to nudge, a nudging distance too short, nudging hesitation |
| 10 | Travelling through a main/side road | Whether failing to avoid main/side road traffic |
| 11 | Pulling over and starting up | Whether entering a parking spot at a reasonable speed, whether a distance between a parking spot and a curb is reasonable, whether accelerating abruptly when starting up, whether a stopping distance is reasonable, parking experience |

Where the 11 autonomous driving scenarios shown in Table 1 are autonomous driving scenarios corresponding to key autonomous driving abilities of L4 level, which are selected from an autonomous driving scenario library combining with road test methods and practice, to evaluate typical autonomous driving abilities which are frequently practiced while driving on a road and influence autonomous driving noticeably.

Step S206, calculating quantitative experience information corresponding to the autonomous driving scenarios according to the experience evaluation data corresponding to the autonomous driving scenarios in the process during which the vehicle is travelling along the test route.

When the experience evaluation data is acquired, experience evaluation data corresponding to each of the autonomous driving scenarios is counted and analyzed to determine the quantitative experience information corresponding to the respective autonomous driving scenario.

Exemplarily, the step may be specifically implemented in the following manner:
regarding any one of the autonomous driving scenarios, experience evaluation data corresponding to the one of the autonomous driving scenarios includes evaluation levels corresponding to the one of the autonomous driving scenarios, where different evaluation levels correspond to different quantitative information; determining a total evaluation count for which an experience evaluation is carried out with respect to the one of the autonomous driving scenarios and an evaluation count of a respective evaluation level corresponding to the one of the autonomous driving scenarios, according to the evaluation levels corresponding to the one of the autonomous driving scenarios; determining a ratio of the evaluation count of the respective evaluation level corresponding to the one of the autonomous driving scenarios to the total evaluation count as an evaluation weight of the respective evaluation level corresponding to the one of the autonomous driving scenarios; and calculating a weighted sum of quantitative information of the evaluation levels based on the evaluation weights of the evaluation levels corresponding to the one of the autonomous driving scenarios, to obtain quantitative experience information corresponding to the one of the autonomous driving scenarios. Thereby, subjective evaluation contents are accurately quantitated.

Where the total evaluation count for which the experience evaluation is carried out with respect to the one of the autonomous driving scenarios equals to a sum of evaluation counts of all of the evaluation levels corresponding to the one of the autonomous driving scenarios. That is, the total evaluation count for which the experience evaluation is carried out with respect to the one of the autonomous driving scenarios, is the number of evaluation personnels who correctly submit experience evaluation data.

For example, in the experience evaluation data, each of the autonomous driving scenarios corresponds to the following 5 evaluation levels: good, quite good, average, bad, quite bad, quantitative information corresponding to the 5 evaluation levels are: 1.0, 0.8, 0.6, 0.4 and 0.2. According to the experience evaluation data, a counting result of the evaluation counts of the evaluation levels corresponding to the autonomous driving scenarios is shown in the following Table 2:

**Table 2**

| No. | Autonomous driving scenario | Good | Quite good | Average | Bad | Quite bad |
|---|---|---|---|---|---|---|
| 1 | Travelling to follow | R1 | R2 | R3 | R4 | R5 |
| 2 | Travelling straight | S1 | S2 | S3 | S4 | S5 |

Where R1, R2, R3, R4 and R5 are respective evaluation counts of the 5 evaluation levels given to an autonomous driving vehicle in a scenario of travelling to follow. The total evaluation count for which the experience evaluation is carried out with respect to the scenario of travelling to follow equals to a sum of R1, R2, R3, R4 and R5, which will be denoted as R; the weights of the 5 evaluation levels corresponding to the scenario of travelling to follow are: R1/R, R2/R, R3/R, R4/R and R5/R; the quantitative experience information of the scenario of travelling to follow may be: B₁=(1.0 × R1/R+0.8 × R2/R+0.6 × R3/R+0.4 × R4/R+0.2 × R5/R).

Where S1, S2, S3, S4 and S5 are respective evaluation counts of the 5 evaluation levels given to an autonomous driving vehicle in a scenario of travelling straight. The total evaluation count for which the experience evaluation is carried out with respect to the scenario of travelling straight equals to a sum of S1, S2, S3, S4 and S5, which will be denoted as S; the weights of the 5 evaluation levels corresponding to the scenario of travelling straight are: S1/S, S2/S, S3/S, S4/S and S5/S; then, the quantitative experience information of the scenario of travelling straight may be: B₂=(1.0 × S1/S+0.8 × S2/S+0.6 × S3/S+0.4 × S4/S+0.2 × S5/S). Counting results for other test scenarios are similar, which will not be exemplified one by one herein.

Additionally, in order to facilitate counting and better understanding, the quantitative experience information corresponding to the respective autonomous driving scenario may be multiply by a coefficient, or represented as a percentage. For example, the quantitative experience information of the scenario of travelling to follow may also be B₁=(1.0×R1/R+0.8×R2/R+0.6×R3/R+0.4×R4/R+0.2×R5/R)× 100. The quantitative experience information of the scenario of travelling straight may also be: B₂=(1.0×S1/S+0.8×S2/S+0.6×S3/S+0.4×S4/S+0.2×S5/S)×100.

Step S207, acquiring weights corresponding to the autonomous driving scenarios.

In the embodiment, the weights corresponding to the autonomous driving scenarios are acquired before determining a second test result according to the quantitative experience information corresponding to the autonomous driving scenarios and the weights corresponding to the autonomous driving scenarios.

Exemplarily, the step may be specifically implemented in the following manner:
acquiring multiple evaluation coefficients corresponding to a respective autonomous driving scenario, where the evaluation coefficients are used for evaluating a level at which the respective autonomous driving scenario influences a driving experience of the vehicle; calculating, according to the evaluation coefficients corresponding to the autonomous driving scenarios, an evaluation coefficient totality corresponding to all of the autonomous driving scenarios, and a sum of evaluation coefficients corresponding to the respective autonomous driving scenario; and determining a ratio of the sum of the evaluation coefficients corresponding to the respective autonomous driving scenario to the evaluation coefficient totality, as the weight corresponding to the respective autonomous driving scenario. A weight corresponding to an autonomous driving scenario, which is determined through an improved analytic hierarchy process, accurately reflects a level at which the autonomous driving scenario influences an overall autonomous driving effect.

Optionally, the evaluation coefficients may be classified into multiple ranks, different ranks correspond to different eligible values, an evaluation coefficient may be one of the multiple eligible values. The evaluation coefficients corresponding to the autonomous driving scenarios are constrained in a range to avoid a large deviation among evaluation coefficients corresponding to different autonomous driving scenarios. For example, the evaluation coefficients are classified into 5 ranks, and the corresponding eligible values are 9, 7, 5, 3, 1.

Exemplarily, an expert evaluation method can be employed to evaluate a level at which an autonomous driving scenario influences an overall autonomous driving effect, where coefficients corresponding to each of the autonomous driving scenarios submitted by multiple experts may be acquired.

For example, evaluation coefficients corresponding to the autonomous driving scenarios submitted by multiple experts are shown in the following table :

**Table 3**

| | Travelling to follow | Travelling straight | Intelligent nudge |
|---|---|---|---|
| Expert 1 | U11 | U21 | U31 |
| Expert 2 | U12 | U22 | U32 |
| ... | | | |
| Expert n | U1n | U2n | U3n |
| Weight | T1 | T2 | T3 |

Where U11, U21 and U31 are respective evaluation coefficients corresponding to 3 autonomous driving scenarios and given by Expert 1, U1n, U2n and U3n are respective evaluation coefficients corresponding to 3 autonomous driving scenarios and given by Expert n. Denoting a totality of evaluation coefficients of all of the autonomous driving scenarios as U, then a weight of a scenario of travelling to follow T1=(U11+U12+...U1n)/U, a weight of a scenario of intelligent nudge T3=(U31+U32+...U3n)/U. The method for calculating weights of other autonomous driving scenarios is similar, which will not be exemplified one by one herein.

Step S208, determining the second test result according to the quantitative experience information corresponding to the autonomous driving scenarios and the weights corresponding to the autonomous driving scenarios.

After acquiring the quantitative experience information corresponding to the respective autonomous driving scenario and the weight corresponding to the respective autonomous driving scenario, a weighted sum of the quantitative experience information corresponding to the autonomous driving scenarios may be calculated to obtain the second test result.

For example, based on the 11 autonomous driving scenarios shown in Table 1, the quantitative experience information corresponding to the autonomous driving scenarios: B1, B2.. .B11, and the weights corresponding to the autonomous driving scenarios: T1, T2...T11, the second test result may be obtained as: W= B1×T1+B2×T2+...+B11×T11.

Through the above steps S205-S208, based on the selected multiple autonomous driving scenarios corresponding to key autonomous driving abilities of L4 level, a subjective evaluation result of autonomous driving is quantitated through an improved analytic hierarchy process and fuzzy evaluation method, a quantitative test result is obtained based on subjective experience evaluation data, which reflects an evaluation result on travelling safety, comfort and intelligence and travelling efficiency of a vehicle from a subjective travelling experience perspective of a passenger.

Step S209, determining a road test result of the vehicle according to the first test result and the second test result of the vehicle.

When the first test result based on the objective road test travelling data and the vehicle surroundings information, and the second test result based on the experience evaluation data are obtained, the road test result of the vehicle is determined by combining the first test result and the second test result.

Optionally, weights of the first test result based on objective data and the second test result based on subjective data may be assigned, such that a weighted sum of the first test result and the second test result is calculated as the road test result of the vehicle.

Additionally, a sum of the first test result based on objective data and the second test result based on subjective data may serve as the road test result of the vehicle; or an eventual road test result may be determined according to the first test result and the second test result through other methods, which are not specifically limited herein.

Step S210, acquiring, according to a current version of an autonomous driving system of the vehicle, a road test result of the vehicle when a previous version of the autonomous driving system is employed.

In the embodiment, the road test result of the vehicle when the previous version of the autonomous driving system is employed may be obtained through the above steps S201-S209, the specific details will not be elaborated herein.

Step S211, comparing road test results of the vehicle when the previous version and the current version of the autonomous driving system are employed, and displaying a comparing result.

By comparing road test results of the vehicle when the previous version and the current version of the autonomous driving system are employed, merits and demerits of the two versions of the autonomous driving system may be shown very intuitively; besides, the comparing result can be displayed.

Through the comparison result of the two versions, it can be very clear whether the current version is better than the previous version, therefore a reference may be provided for determining an optimization guidance of the autonomous driving system.

In the embodiment, the process in the road test method for an autonomous driving vehicle to determine the second test result based on the experience evaluation data, and to determine the first test result based on the objective road test travelling data and the vehicle surroundings information, is explained in detail, and the road test result of the vehicle is obtained by combining the first test result and the second test result. In this way, the road test result of the vehicle includes an objective test result based on objective test data such that rigorousness and preciseness of the road test of the vehicle are guaranteed, besides, the road test result of the vehicle also includes a quantitative test result based on subjective experience evaluation data, which reflects an evaluation result on travelling safety, comfort and intelligence and travelling efficiency of a vehicle from a subjective perspective of a passenger, thereby a more comprehensive road test result is obtained, and an overall performance of an autonomous driving vehicle in the road test is evaluated more accurately, such that the accuracy of a road test result of an autonomous driving vehicle is improved.

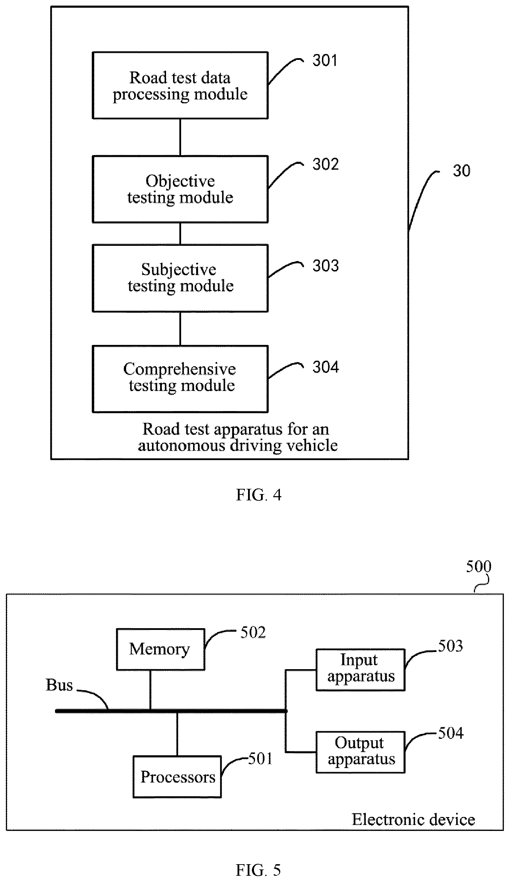

FIG. 4 is a schematic diagram of a road test apparatus for an autonomous driving vehicle according to a third embodiment of the present application. The road test apparatus for an autonomous driving vehicle provided in the embodiment of the present application can carry out the processing procedure provided in the embodiments of the road test method for an autonomous driving vehicle. As shown in FIG. 4, a road test apparatus 30 for an autonomous driving vehicle includes: a road test data processing module 301, an objective testing module 302, a subjective testing module 303 and a comprehensive testing module 304.

Specifically, the road test data processing module 301 is configured to acquire autonomous driving scenarios, information of test parameters corresponding to the autonomous driving scenarios and experience evaluation data in a process during which a vehicle is travelling along a test route, where different autonomous driving scenarios correspond to different test parameters.

The objective testing module 302 is configured to analyze the information of the test parameters corresponding to the autonomous driving scenarios according to evaluation baselines corresponding to the autonomous driving scenarios, to determine a first test result of the vehicle.

The subjective testing module 303 is configured to generate a second test result according to the experience evaluation data.

The comprehensive testing module 304 is configured to determine a road test result of the vehicle according to the first test result and the second test result of the vehicle.

The apparatus provided in the embodiment of the present application may be specifically configured to carry out the method embodiment provided in the forgoing first embodiment, whose functions will not be elaborated herein.

According to the embodiment of the present application, autonomous driving scenarios and information of test parameters corresponding to the autonomous driving scenarios in a process during which a vehicle is travelling along a test route are obtained, the information of the test parameters corresponding to the autonomous driving scenario is analyzed according to evaluation baselines corresponding to the autonomous driving scenarios, to determine a first test result of the vehicle, that is, the first test result is obtained by evaluating an autonomous driving ability of the vehicle according to objective test data such as the information of the test parameters corresponding to the autonomous driving scenarios; a second test result is obtained by evaluating an autonomous driving ability of the vehicle from a travelling experience perspective of an evaluation personnel according to subjective evaluation data such as experience evaluation data; and a road test result of the vehicle is obtained by combining the first test result and the second test result. In this way, the road test result of the vehicle includes an objective test result based on objective test data such that objectivity, rigorousness and preciseness of the road test of the vehicle are guaranteed, besides, the road test result of the vehicle also includes a quantitative test result based on subjective experience evaluation data, which reflects an evaluation result on travelling safety, comfort and intelligence and travelling efficiency of a vehicle from a subjective travelling experience perspective of a passenger, thereby a more comprehensive road test result is obtained, and an overall performance of an autonomous driving vehicle in the road test is evaluated more accurately, such that the accuracy of a road test result of an autonomous driving vehicle is improved.

Based on the third embodiment, in a fourth embodiment, the road test data processing module 301 is further configured to:
acquire road test travelling data in the process during which the vehicle is travelling along the test route; analyze the road test travelling data, or the road test travelling data and the vehicle surroundings information to identify autonomous driving scenarios which occur in the process during which the vehicle is travelling along the test route; and acquire the information of the test parameters corresponding to the autonomous driving scenarios; where the vehicle surroundings information includes one or more of the following: a distance between the vehicle and a vehicle in front, information of a lane on which the vehicle is travelling, intersection information of an intersection to which the vehicle is travelling, information of traffic around the vehicle.

In a possible implementation, the road test data processing module is further configured to:
analyze vehicle controlling information in the road test travelling data; and determine that one of the autonomous driving scenarios occurs in the process during which the vehicle is travelling along the test route, if the vehicle controlling information includes controlling information corresponding to the one of the autonomous driving scenarios.

In a possible implementation, the road test data processing module is further configured to:
analyze the road test travelling data and the vehicle surroundings information to acquire a behavior characteristic of the vehicle; and determine, according to the behavior characteristic of the vehicle, that one of the autonomous driving scenarios occurs in the process during which the vehicle is travelling along the test route if the vehicle has a behavior characteristic of the one of the autonomous driving scenario.

In a possible implementation, the road test data processing module is further configured to:
determine occurrence times of the autonomous driving scenarios; and acquire, from the road test travelling data and the vehicle surroundings information, actual values of the test parameters corresponding to the autonomous driving scenarios at the occurrence times.

In a possible implementation, the objective testing module is further configured to:
the information of the test parameters corresponding to the autonomous driving scenarios includes actual values of the test parameters corresponding to the autonomous driving scenarios, the evaluation baselines corresponding to the autonomous driving scenarios include baseline ranges of the test parameters corresponding to the autonomous driving scenarios; determine test parameters whose actual values are within corresponding baseline ranges according to the actual values of the test parameters corresponding to the autonomous driving scenarios and the baseline ranges of the test parameters corresponding to the autonomous driving scenarios; and determine a sum of evaluation values corresponding to the test parameters whose actual values are within corresponding baseline ranges as the first test result of the vehicle; where each of the test parameters corresponding to each of the autonomous driving scenarios corresponds to an evaluation value.

In a possible implementation, the subjective testing module is further configured to:
calculate quantitative experience information corresponding to the autonomous driving scenarios according to experience evaluation data corresponding to the autonomous driving scenarios in the process during which the vehicle is travelling along the test route; and determine the second test result according to the quantitative experience information corresponding to the autonomous driving scenarios and weights corresponding to the autonomous driving scenarios.

In a possible implementation, the subjective testing module is further configured to:
regarding any one of the autonomous driving scenarios, experience evaluation data corresponding to the one of the autonomous driving scenarios includes evaluation levels corresponding to the one of the autonomous driving scenarios, where different evaluation levels correspond to different quantitative information; determine a total evaluation count for which an experience evaluation is carried out with respect to the one of the autonomous driving scenarios and an evaluation count of a respective evaluation level corresponding to the one of the autonomous driving scenarios, according to the evaluation levels corresponding to the one of the autonomous driving scenarios; determine a ratio of the evaluation count of the respective evaluation level corresponding to the one of the autonomous driving scenarios to the total evaluation count as an evaluation weight of the respective evaluation level corresponding to the one of the autonomous driving scenarios; and calculate a weighted sum of quantitative information of the evaluation levels based on the evaluation weights of the evaluation levels corresponding to the one of the autonomous driving scenarios, to obtain quantitative experience information corresponding to the one of the autonomous driving scenarios.

In a possible implementation, the subjective testing module is further configured to:
acquire multiple evaluation coefficients corresponding to a respective autonomous driving scenario, where the evaluation coefficients are used for evaluating a level at which the respective autonomous driving scenario influences a driving experience of the vehicle; calculate, according to the evaluation coefficients corresponding to the autonomous driving scenarios, an evaluation coefficient totality corresponding to all of the autonomous driving scenarios, and a sum of evaluation coefficients corresponding to the respective autonomous driving scenario; and determine a ratio of the sum of the evaluation coefficients corresponding to the respective autonomous driving scenario to the evaluation coefficient totality, as the weight corresponding to the respective autonomous driving scenario.

In a possible implementation, the road test data processing module is further configured to:
send an evaluation factor corresponding to a respective autonomous driving scenario to multiple experience evaluation terminals; and receive experience evaluation data corresponding to the respective autonomous driving scenario, the experience evaluation data being collected based on the evaluation factor in the process during which the vehicle is travelling along the test route and submitted by the multiple experience evaluation terminals.

In a possible implementation, the comprehensive testing module is further configured to:
after determining the road test result of the vehicle according to the first test result and the second test result of the vehicle, acquire, according to a current version of an autonomous driving system of the vehicle, a road test result of the vehicle when a previous version of the autonomous driving system is employed; and compare road test results of the vehicle when the previous version and the current version of the autonomous driving system are employed, and display a comparing result.

The apparatus provided in the embodiment of the present application may be specifically configured to carry out the method embodiment provided in the foregoing second embodiment, whose functions will not be elaborated herein.

In the embodiment, the process in the road test method for an autonomous driving vehicle to determine the second test result based on the experience evaluation data, and to determine the first test result based on the objective road test travelling data and the vehicle surroundings information, is explained in detail, and the road test result of the vehicle is obtained by combining the first test result and the second test result. In this way, the road test result of the vehicle includes an objective test result based on objective test data such that rigorousness and preciseness of the road test of the vehicle are guaranteed, besides, the road test result of the vehicle also includes a quantitative test result based on subjective experience evaluation data, which reflects an evaluation result on travelling safety, comfort and intelligence and travelling efficiency of a vehicle from a subjective perspective of a passenger, thereby a more comprehensive road test result is obtained, and an overall performance of an autonomous driving vehicle in the road test is evaluated more accurately, such that the accuracy of a road test result of an autonomous driving vehicle is improved.

According to an embodiment of the present application, the present application provides a computer program, the computer program is stored in a computer-readable storage medium, at least one processor of an electronic device can read the computer program from the computer-readable storage medium, and the at least one processor executes the computer program to enable the electronic device to execute the method provided by any of the above embodiments.

According to an embodiment of the present application, the present application further provides an electronic device and a readable storage medium.

FIG. 5 is a schematic diagram of an electronic device to implement the road test method for an autonomous driving vehicle of the present application. The electronic device is intended to represent a digital computer of various forms, such as a laptop, a desktop, a workstation, a personal digital assistant, a server, a blade server, a mainframe computer, or other suitable computers. The electronic device may also represent a mobile device of various forms, such as a personal digital assistant, a cellular phone, a smart phone, a wearable device or other similar computing devices. The components shown herein, the connections and relationships thereof, and functions thereof, are only examples and are not intended to limit the implementation of the application described and/or claimed herein.

As shown in FIG. 5, the electronic device 500 includes: one or more processors 501, a memory 502 and interfaces interconnecting the respective components, including a high-speed interface and a low-speed interface. The various components are connected to each other with different buses which may be installed on a common motherboard or otherwise as needed. The processor 501 may process instructions executed by the electronic device 500, including instructions stored in or on the memory to display graphical information of a GUI on an external input/output apparatus (such as a display device coupled to an interface). In other implementations, if necessary, multiple processors and/or multiple buses can be combined with multiple memories. Similarly, multiple electronic devices 500 can be interconnected, and each device provides some necessary operations (for example, as a server array, a group of blade servers, or a multi-processor system). FIG. 5 shows an example of one processor 501.

The memory 502 is the non-transitory computer-readable storage medium provided in the present application. Where, the memory stores instructions that can be executed by at least one processor to cause the at least one processor to carry out the road test method for an autonomous driving vehicle provided in the present application. The non-transitory computer-readable storage medium of the present application stores thereon computer instructions, and the computer instructions are intended to cause a computer to carry out the road test method for an autonomous driving vehicle provided in the present application.

The memory 502, as a non-transitory computer-readable storage medium, can be used to store non-transitory software programs, non-transitory computer-executable programs and modules, such as the program instructions/modules corresponding to the road test method for an autonomous driving vehicle in the embodiments of the present application, for example, the road test data processing module 301, the objective testing module 302, the subjective testing module 303, and the comprehensive testing module 304 shown in FIG. 4. The processor 501 executes various functional applications and data processing of a server by running non-transitory software programs, instructions, and modules stored in the memory 502, that is, implements the road test method for an autonomous driving vehicle in the foregoing method embodiments.

The memory 502 may include a program storage area and a data storage area, where the program storage area may store an operating system and an application program required by at least one function; the data storage area may store data created by the use of the electronic device 500 when implementing the road test method for an autonomous driving vehicle, or the like. In addition, the memory 502 may include a high-speed random access memory, and may also include a non-transitory memory, such as at least one magnetic disk storage device, a flash memory device, or other non-transitory solid-state storage devices. In some embodiments, the memory 502 may optionally include memories remotely provided with respect to the processor 501, and these remote memories may be connected via a network to the electronic device 500 implementing the road test method for an autonomous driving vehicle. Examples of the above network includes but not limited to, the Internet, a corporate intranet, a local area network, a mobile communication network, or a combination thereof.

The electronic device 500 implementing the road test method for an autonomous driving vehicle may further include: an input apparatus 503 and an output apparatus 504. The processor 501, the memory 502, the input apparatus 503, and the output apparatus 504 may be interconnected with a bus or otherwise. FIG. 5 shows an example of connection by a bus.

The input apparatus 503 may receive input number or character information, and generate key signal input related to the user settings and function controlling of the electronic device 500 implementing the road test method for an autonomous driving vehicle, which may be an input apparatus such as a touch screen, a keypad, a mouse, a track board, a touchpad, a pointing stick, one or more mouse buttons, a trackball or a joystick. The output apparatus 504 may include a display device, an auxiliary lighting device (for example, LED), a tactile feedback device (for example, a vibration motor) and the like. The display device may include but not limited to, a liquid crystal display (LCD), a light emitting diode (LED) display, a monitor or a plasma display. In some embodiments, the display device may be a touch screen.

Various implementations of the systems and technologies described herein may be implemented in a digital electronic circuit system, an integrated circuit system, an application-specific ASIC (application-specific integrated circuits), a computer hardware/firmware/software, and/or a combination thereof. These various embodiments may be implemented in one or more computer programs, the one or more computer programs may be executed and/or interpreted in a programmable system including at least one programmable processor, the programmable processor may be a special-purpose or a general-purpose programmable processor that can receive data and instructions from a storage system, at least one input apparatus, or at least one output apparatus, and transmit data and instructions to the storage system, the at least one input apparatus, or the at least one output apparatus.

These computer programs (also called programs, software, software applications, or codes) include machine instructions for programmable processors, which may be implemented by using a high-level programming language and/or an object-oriented programming language and/or assembly/machine language. As used herein, the terms "a machine-readable medium" and "a computer-readable medium" refer to any computer program product, device, and/or apparatus used to provide machine instructions and/or data to a programmable processor, for example, a magnetic disk, an optical disk, a memory, a programmable logic devices (PLD), which includes a machine-readable medium that receives machine instructions as machine-readable signals. The term "machine-readable signal" refers to any signal used to provide machine instructions and/or data to a programmable processor.

For the purpose to provide interactions with a user, the system and technology described herein may be implemented in a computer with: a display device for displaying information to the user (for example, a CRT (cathode ray tube) or LCD (liquid crystal display) monitor), a keyboard and a pointing device (for example, a mouse or a trackball) through which input can be provided to the computer by a user. Other types of devices may also be used to provide interactions with a user. For example, a feedback provided to a user may be sensory feedback of any form, for example, a visual feedback, an auditory feedback, or a tactile feedback, and an input may be received from a user in any form (including an acoustic input, a voice input, or a tactile input).

The systems and technologies described here may be implemented in a computing system that includes a back-end component, for example, as a data server; or in a computing system that includes a middleware component, for example, an application server, or in a computing system that includes a front-end component, for example, a user computer with a graphical user interface or a web browser through which a user can interact with the implementations of the system and technology described herein, or in a computing system that includes any combination of such background component, intermediate component or the front-end component. The components of the system may be interconnected through any form or medium of digital data communication, for example, a communication network. Examples of the communication network include: a local area network (LAN), a wide area network (WAN), and the Internet.

A computer system may include a client and a server. The client and server are generally remote from each other and usually interact through a communication network. The relationship of a client and a server is established by computer programs that run on the corresponding computers and have a client-server relationship with each other.

According to the technical solution of the embodiments of the present application, autonomous driving scenarios and information of test parameters corresponding to the autonomous driving scenarios in a process during which a vehicle is travelling along a test route are obtained, the information of the test parameters corresponding to the autonomous driving scenario is analyzed according to evaluation baselines corresponding to the autonomous driving scenarios, to determine a first test result of the vehicle, that is, the first test result is obtained by evaluating an autonomous driving ability of the vehicle according to objective test data such as the information of the test parameters corresponding to the autonomous driving scenarios; a second test result is obtained by evaluating an autonomous driving ability of the vehicle from a travelling experience perspective of an evaluation personnel according to subjective evaluation data such as experience evaluation data; and a road test result of the vehicle is obtained by combining the first test result and the second test result. In this way, the road test result of the vehicle includes an objective test result based on objective test data such that objectivity, rigorousness and preciseness of the road test of the vehicle are guaranteed, besides, the road test result of the vehicle also includes a quantitative test result based on subjective experience evaluation data, which reflects an evaluation result on travelling safety, comfort and intelligence and travelling efficiency of a vehicle from a subjective travelling experience perspective of a passenger, thereby a more comprehensive road test result is obtained, and an overall performance of an autonomous driving vehicle in the road test is evaluated more accurately, such that the accuracy of a road test result of an autonomous driving vehicle is improved.

It should be understood that based on the processes of various forms as shown above, steps may be reordered, added or deleted. For example, the various steps described in the present application may be executed in parallel, sequentially, or in a different order, as long as the desired result of the technical solution disclosed in the present application can be achieved, the specific order is not limited herein.

The foregoing specific implementations are not intended to put limitations to the protection scope of the present application. Those skilled in the art should understand that various modifications, combinations, sub-combinations and substitutions can be made according to design requirements and other factors. Any modifications, equivalent substitutions and improvements made within the spirit and principles of the present application shall be included in the scope of protection of the present application which is defined solely by the appended claims.

## Claims

1. A road test method for an autonomous driving vehicle, comprising:
acquiring (S101) autonomous driving scenarios, information of test parameters corresponding to the autonomous driving scenarios and experience evaluation data in a process during which a vehicle is travelling along a test route, wherein different autonomous driving scenarios correspond to different test parameters, wherein the vehicle is loaded with an evaluation personnel, and the experience evaluation data is subjective evaluation data that is submitted by the evaluation personnel based on a travelling experience in the process during which the vehicle is travelling along the test route, wherein the experience evaluation data is evaluation data on coping abilities corresponding to the autonomous driving scenarios in a travelling process of the vehicle;
analyzing (S102, S204) the information of the test parameters corresponding to the autonomous driving scenarios according to evaluation baselines corresponding to the autonomous driving scenarios, to determine a first test result of the vehicle;
generating (S103) a second test result according to the experience evaluation data; and
determining (S104, S209) a road test result of the vehicle according to the first test result and the second test result of the vehicle.

2. The method according to claim 1, wherein, the acquiring autonomous driving scenarios, information of test parameters corresponding to the autonomous driving scenarios in a process during which a vehicle is travelling along a test route, comprises:
acquiring (S201) road test travelling data in the process during which the vehicle is travelling along the test route;
analyzing (S202) the road test travelling data, or the road test travelling data and vehicle surroundings information to identify autonomous driving scenarios which occur in the process during which the vehicle is travelling along the test route; and
acquiring (S203) the information of the test parameters corresponding to the autonomous driving scenarios;
wherein the vehicle surroundings information comprises one or more of the following:
a distance between the vehicle and a vehicle in front, information of a lane on which the vehicle is travelling, intersection information of an intersection to which the vehicle is travelling, information of traffic around the vehicle.

3. The method according to claim 2, wherein, the analyzing (S202) the road test travelling data, or the road test travelling data and the vehicle surroundings information to identify autonomous driving scenarios which occur in the process during which the vehicle is travelling along the test route, comprises:
analyzing vehicle controlling information in the road test travelling data; and
determining that one of the autonomous driving scenarios occurs in the process during which the vehicle is travelling along the test route, if the vehicle controlling information includes controlling information corresponding to the one of the autonomous driving scenarios;
or,
analyzing the road test travelling data and the vehicle surroundings information to acquire a behavior characteristic of the vehicle; and
determining, according to the behavior characteristic of the vehicle, that one of the autonomous driving scenarios occurs in the process during which the vehicle is travelling along the test route if the vehicle has a behavior characteristic of the one of the autonomous driving scenario.

4. The method according to claim 2, wherein, the acquiring autonomous driving scenarios and information of test parameters corresponding to the autonomous driving scenarios in a process during which a vehicle is travelling along a test route, comprises:
determining occurrence times of the autonomous driving scenarios; and
acquiring, from the road test travelling data and the vehicle surroundings information, actual values of the test parameters corresponding to the autonomous driving scenarios at the occurrence times.

5. The method according to claim 1, wherein, the information of the test parameters corresponding to the autonomous driving scenarios comprises actual values of the test parameters corresponding to the autonomous driving scenarios, the evaluation baselines corresponding to the autonomous driving scenarios comprise baseline ranges of the test parameters corresponding to the autonomous driving scenarios; and
the analyzing (S102, S204) the information of the test parameters corresponding to the autonomous driving scenarios according to evaluation baselines corresponding to the autonomous driving scenarios, to determine a first test result of the vehicle, comprises:
determining test parameters whose actual values are within corresponding baseline ranges according to the actual values of the test parameters corresponding to the autonomous driving scenarios and the baseline ranges of the test parameters corresponding to the autonomous driving scenarios; and
determining a sum of evaluation values corresponding to the test parameters whose actual values are within corresponding baseline ranges as the first test result of the vehicle;
wherein each of the test parameters corresponding to each of the autonomous driving scenarios corresponds to an evaluation value.

6. The method according to claim 1, wherein, the generating (S103) a second test result according to the experience evaluation data, comprises:
calculating (S206) quantitative experience information corresponding to the autonomous driving scenarios according to experience evaluation data corresponding to the autonomous driving scenarios in the process during which the vehicle is travelling along the test route; and
determining (S208) the second test result according to the quantitative experience information corresponding to the autonomous driving scenarios and weights corresponding to the autonomous driving scenarios.

7. The method according to claim 6, wherein, the calculating (S206) quantitative experience information corresponding to the autonomous driving scenarios according to experience evaluation data corresponding to the autonomous driving scenarios in the process during which the vehicle is travelling along the test route, comprises:
regarding any one of the autonomous driving scenarios, experience evaluation data corresponding to the one of the autonomous driving scenarios comprises evaluation levels corresponding to the one of the autonomous driving scenarios, wherein different evaluation levels correspond to different quantitative information;
determining a total evaluation count for which an experience evaluation is carried out with respect to the one of the autonomous driving scenarios and an evaluation count of a respective evaluation level corresponding to the one of the autonomous driving scenarios, according to the evaluation levels corresponding to the one of the autonomous driving scenarios;
determining a ratio of the evaluation count of the respective evaluation level corresponding to the one of the autonomous driving scenarios to the total evaluation count as an evaluation weight of the respective evaluation level corresponding to the one of the autonomous driving scenarios; and
calculating a weighted sum of quantitative information of the evaluation levels based on the evaluation weights of the evaluation levels corresponding to the one of the autonomous driving scenarios, to obtain quantitative experience information corresponding to the one of the autonomous driving scenarios.

8. The method according to claim 6, wherein, before the determining the second test result according to the quantitative experience information corresponding to the autonomous driving scenarios and weights corresponding to the autonomous driving scenarios, further comprising:
acquiring multiple evaluation coefficients corresponding to a respective autonomous driving scenario, wherein the evaluation coefficients are used for evaluating a level at which the respective autonomous driving scenario influences a driving experience of the vehicle;
calculating, according to the evaluation coefficients corresponding to the autonomous driving scenarios, an evaluation coefficient totality corresponding to all of the autonomous driving scenarios, and a sum of evaluation coefficients corresponding to the respective autonomous driving scenario; and
determining a ratio of the sum of the evaluation coefficients corresponding to the respective autonomous driving scenario to the evaluation coefficient totality, as the weight corresponding to the respective autonomous driving scenario.

9. The method according to any one of claims 1-8, wherein, the acquiring experience evaluation data in a process during which a vehicle is travelling along a test route, comprises:
sending an evaluation factor corresponding to a respective autonomous driving scenario to multiple experience evaluation terminals; and
receiving, experience evaluation data corresponding to the respective autonomous driving scenario, the experience evaluation data being collected based on the evaluation factor in the process during which the vehicle is travelling along the test route and submitted by the multiple experience evaluation terminals.

10. The method according to any one of claims 1-8, wherein, after the determining a road test result of the vehicle according to the first test result and the second test result of the vehicle, further comprising:
acquiring (S210), according to a current version of an autonomous driving system of the vehicle, a road test result of the vehicle when a previous version of the autonomous driving system is employed; and
comparing (S211) road test results of the vehicle when the previous version and the current version of the autonomous driving system are employed, and displaying a comparing result.

11. A road test apparatus for an autonomous driving vehicle, comprising:
a road test data processing module (301), configured to acquire autonomous driving scenarios, information of test parameters corresponding to the autonomous driving scenarios and experience evaluation data in a process during which a vehicle is travelling along a test route, wherein different autonomous driving scenarios correspond to different test parameters, wherein the vehicle is loaded with an evaluation personnel, and the experience evaluation data is subjective evaluation data that is submitted by the evaluation personnel based on a travelling experience in the process during which the vehicle is travelling along the test route, wherein the experience evaluation data is evaluation data on coping abilities corresponding to the autonomous driving scenarios in a travelling process of the vehicle;
an objective testing module (302), configured to analyze the information of the test parameters corresponding to the autonomous driving scenarios according to evaluation baselines corresponding to the autonomous driving scenarios, to determine a first test result of the vehicle;
a subjective testing module (303), configured to generate a second test result according to the experience evaluation data; and
a comprehensive testing module (304), configured to determine a road test result of the vehicle according to the first test result and the second test result of the vehicle.

12. The apparatus according to claim 11, wherein the road test data processing module (301) is further configured to:
acquire road test travelling data in the process during which the vehicle is travelling along the test route;
analyze the road test travelling data, or the road test travelling data and vehicle surroundings information to identify autonomous driving scenarios which occur in the process during which the vehicle is travelling along the test route; and
acquire the information of the test parameters corresponding to the autonomous driving scenarios;
wherein the vehicle surroundings information comprises one or more of the following:
a distance between the vehicle and a vehicle in front, information of a lane on which the vehicle is travelling, intersection information of an intersection to which the vehicle is travelling, information of traffic around the vehicle.

13. The apparatus according to claim 12, wherein,
the road test data processing module (301) is further configured to:
analyze vehicle controlling information in the road test travelling data; and
determine that one of the autonomous driving scenarios occurs in the process during which the vehicle is travelling along the test route, if the vehicle controlling information includes controlling information corresponding to the one of the autonomous driving scenarios;
or, the road test data processing module (301) is further configured to:
analyze the road test travelling data and the vehicle surroundings information to acquire a behavior characteristic of the vehicle; and
determine, according to the behavior characteristic of the vehicle, that one of the autonomous driving scenarios occurs in the process during which the vehicle is travelling along the test route if the vehicle has a behavior characteristic of the one of the autonomous driving scenario.

14. The apparatus according to claim 11, wherein, the information of the test parameters corresponding to the autonomous driving scenarios comprises actual values of the test parameters corresponding to the autonomous driving scenarios, the evaluation baselines corresponding to the autonomous driving scenarios comprise baseline ranges of the test parameters corresponding to the autonomous driving scenarios; and the objective testing module (302) is further configured to:
determine test parameters whose actual values are within corresponding baseline ranges according to the actual values of the test parameters corresponding to the autonomous driving scenarios and the baseline ranges of the test parameters corresponding to the autonomous driving scenarios; and
determine a sum of evaluation values corresponding to the test parameters whose actual values are within corresponding baseline ranges as the first test result of the vehicle;
wherein each of the test parameters corresponding to each of the autonomous driving scenarios corresponds to an evaluation value.

15. The apparatus according to claim 11, wherein the subjective testing module (303) is further configured to:
calculate quantitative experience information corresponding to the autonomous driving scenarios according to experience evaluation data corresponding to the autonomous driving scenarios in the process during which the vehicle is travelling along the test route; and
determine the second test result according to the quantitative experience information corresponding to the autonomous driving scenarios and weights corresponding to the autonomous driving scenarios.

16. An electronic device, comprising:
at least one processor; and
a memory communicatively connected with the at least one processor; wherein
the memory stores thereon instructions executable by the at least one processor; and the instructions, when being executed by the at least one processor, cause the at least one processor to implement the method according to any one of claims 1-10.

17. A computer program product, comprising a computer program which, when being executed by a processor, implements the method according to any one of claims 1-10.

## Patentansprüche

1. Straßentestverfahren für ein autonom fahrendes Fahrzeug, umfassend:
Erfassen (S101) von autonomen Fahrszenarien, Informationen von Testparametern, die den autonomen Fahrszenarien entsprechen, und Erfahrungsbewertungsdaten in einem Prozess, während dessen ein Fahrzeug eine Teststrecke entlang fährt, wobei unterschiedliche autonome Fahrszenarien unterschiedlichen Testparametern entsprechen, wobei das Fahrzeug mit einem Bewertungspersonal beladen ist und die Erfahrungsbewertungsdaten subjektive Bewertungsdaten sind, die durch das Bewertungspersonal auf Basis einer Fahrerfahrung in dem Prozess, während dessen das Fahrzeug die Teststrecke entlang fährt, übermittelt werden, wobei die Erfahrungsbewertungsdaten Bewertungsdaten zu Bewältigungsfähigkeiten, die den autonomen Fahrszenarien entsprechen, in einem Fahrprozess des Fahrzeugs sind,
Analysieren (S102, S204) der Informationen der Testparameter, die den autonomen Fahrszenarien entsprechen, gemäß Bewertungsbasislinien, die den autonomen Fahrszenarien entsprechen, um ein erstes Testergebnis des Fahrzeugs zu bestimmen,
Generieren (S103) eines zweiten Testergebnisses gemäß den Erfahrungsbewertungsdaten und
Bestimmen (S104, S209) eines Straßentestergebnisses des Fahrzeugs gemäß dem ersten Testergebnis und dem zweiten Testergebnis des Fahrzeugs.

2. Verfahren nach Anspruch 1, wobei das Erfassen von autonomen Fahrszenarien, Informationen von Testparametern, die den autonomen Fahrszenarien entsprechen, in einem Prozess, während dessen ein Fahrzeug eine Teststrecke entlang fährt, Folgendes umfasst:
Erfassen (S201) von Straßentestfahrdaten in dem Prozess, während dessen das Fahrzeug die Teststrecke entlang fährt, und
Analysieren (S202) der Straßentestfahrdaten oder der Straßentestfahrdaten und Fahrzeugumgebungsinformationen, um autonome Fahrszenarien zu identifizieren, die in dem Prozess auftreten, während dessen das Fahrzeug die Teststrecke entlang fährt, und
Erfassen (S203) der Informationen der Testparameter, die den autonomen Fahrszenarien entsprechen,
wobei die Fahrzeugumgebungsinformationen eines oder mehreres des Folgenden umfassen:
einen Abstand zwischen dem Fahrzeug und einem vorausfahrenden Fahrzeug, Informationen einer Fahrspur, auf der das Fahrzeug fährt, Kreuzungsinformationen einer Kreuzung, zu der das Fahrzeug fährt, Informationen des Verkehrs um das Fahrzeug herum.

3. Verfahren nach Anspruch 2, wobei das Analysieren (S202) der Straßentestfahrdaten oder der Straßentestfahrdaten und der Fahrzeugumgebungsinformationen zum Identifizieren von autonomen Fahrszenarien, die in dem Prozess auftreten, während dessen das Fahrzeug die Teststrecke entlang fährt, Folgendes umfasst:
Analysieren von Fahrzeugsteuerinformationen in den Straßentestfahrdaten und
Bestimmen, dass eines der autonomen Fahrszenarien in dem Prozess auftritt, während dessen das Fahrzeug die Teststrecke entlang fährt, wenn die Fahrzeugsteuerinformationen Steuerinformationen beinhalten, die dem einen der autonomen Fahrszenarien entsprechen,
oder
Analysieren der Straßentestfahrdaten und der Fahrzeugumgebungsinformationen, um eine Verhaltenseigenschaft des Fahrzeugs zu erfassen, und
Bestimmen gemäß der Verhaltenseigenschaft des Fahrzeugs, dass eines der autonomen Fahrszenarien in dem Prozess auftritt, während dessen das Fahrzeug die Teststrecke entlang fährt, wenn das Fahrzeug eine Verhaltenseigenschaft des einen des autonomen Fahrszenarios aufweist.

4. Verfahren nach Anspruch 2, wobei das Erfassen von autonomen Fahrszenarien und Informationen von Testparametern, die den autonomen Fahrszenarien entsprechen, in einem Prozess, während dessen ein Fahrzeug eine Teststrecke entlang fährt, Folgendes umfasst:
Bestimmen von Auftrittszeitpunkten der autonomen Fahrszenarien und
Erfassen aus den Straßentestfahrdaten und den Fahrzeugumgebungsinformationen von Istwerten der Testparameter, die den autonomen Fahrszenarien entsprechen, zu den Auftrittszeitpunkten.

5. Verfahren nach Anspruch 1, wobei die Informationen der Testparameter, die den autonomen Fahrszenarien entsprechen, Istwerte der Testparameter umfassen, die den autonomen Fahrszenarien entsprechen, die Bewertungsbasislinien, die den autonomen Fahrszenarien entsprechen, Basislinienbereiche der Testparameter umfassen, die den autonomen Fahrszenarien entsprechen, und
das Analysieren (S102, S204) der Informationen der Testparameter, die den autonomen Fahrszenarien entsprechen, gemäß Bewertungsbasislinien, die den autonomen Fahrszenarien entsprechen, zum Bestimmen eines ersten Testergebnisses des Fahrzeugs Folgendes umfasst:
Bestimmen von Testparametern, deren Istwerte innerhalb von entsprechenden Basislinienbereichen liegen, gemäß den Istwerten der Testparameter, die den autonomen Fahrszenarien entsprechen, und den Basislinienbereichen der Testparameter, die den autonomen Fahrszenarien entsprechen, und
Bestimmen einer Summe von Bewertungswerten, die den Testparametern entsprechen, deren Istwerte innerhalb von entsprechenden Basislinienbereichen liegen, als das erste Testergebnis des Fahrzeugs,
wobei jeder der Testparameter, die jedem der autonomen Fahrszenarien entsprechen, einem Bewertungswert entspricht.

6. Verfahren nach Anspruch 1, wobei das Generieren (S103) eines zweiten Testergebnisses gemäß den Erfahrungsbewertungsdaten Folgendes umfasst:
Berechnen (S206) von quantitativen Erfahrungsinformationen, die den autonomen Fahrszenarien entsprechen, gemäß Erfahrungsbewertungsdaten, die den autonomen Fahrszenarien entsprechen, in dem Prozess, während dessen das Fahrzeug die Teststrecke entlang fährt, und
Bestimmen (S208) des zweiten Testergebnisses gemäß den quantitativen Erfahrungsinformationen, die den autonomen Fahrszenarien entsprechen, und Gewichten, die den autonomen Fahrszenarien entsprechen.

7. Verfahren nach Anspruch 6, wobei das Berechnen (S206) von quantitativen Erfahrungsinformationen, die den autonomen Fahrszenarien entsprechen, gemäß Erfahrungsbewertungsdaten, die den autonomen Fahrszenarien entsprechen, in dem Prozess, während dessen das Fahrzeug die Teststrecke entlang fährt, Folgendes umfasst:
bezüglich eines der autonomen Fahrszenarien umfassen Erfahrungsbewertungsdaten, die dem einen der autonomen Fahrszenarien entsprechen, Bewertungsstufen, die dem einen der autonomen Fahrszenarien entsprechen, wobei unterschiedliche Bewertungsstufen unterschiedlichen quantitativen Informationen entsprechen,
Bestimmen einer Gesamtbewertungszahl, für die eine Erfahrungsbewertung in Bezug auf das eine der autonomen Fahrszenarien ausgeführt wird, und einer Bewertungszahl einer jeweiligen Bewertungsstufe, die dem einen der autonomen Fahrszenarien entspricht, gemäß den Bewertungsstufen, die dem einen der autonomen Fahrszenarien entsprechen,
Bestimmen eines Verhältnisses der Bewertungszahl der jeweiligen Bewertungsstufe, die dem einen der autonomen Fahrszenarien entspricht, zur Gesamtbewertungszahl als ein Bewertungsgewicht der jeweiligen Bewertungsstufe, die dem einen der autonomen Fahrszenarien entspricht, und
Berechnen einer gewichteten Summe von quantitativen Informationen der Bewertungsstufen auf Basis der Bewertungsgewichte der Bewertungsstufen, die dem einen der autonomen Fahrszenarien entsprechen, um quantitative Erfahrungsinformationen, die dem einen der autonomen Fahrszenarien entsprechen, zu erhalten.

8. Verfahren nach Anspruch 6, wobei vor dem Bestimmen des zweiten Testergebnisses gemäß den quantitativen Erfahrungsinformationen, die den autonomen Fahrszenarien entsprechen, und Gewichten, die den autonomen Fahrszenarien entsprechen, ferner umfassend:
Erfassen von mehreren Bewertungskoeffizienten, die einem jeweiligen autonomen Fahrszenario entsprechen, wobei die Bewertungskoeffizienten zum Bewerten einer Stufe verwendet werden, bei der das jeweilige autonome Fahrszenario eine Fahrerfahrung des Fahrzeugs beeinflusst,
Berechnen gemäß den Bewertungskoeffizienten, die den autonomen Fahrszenarien entsprechen, einer Bewertungskoeffizient-Gesamtheit, die allen der autonomen Fahrszenarien entspricht, und einer Summe von Bewertungskoeffizienten, die dem jeweiligen autonomen Fahrszenario entsprechen, und
Bestimmen eines Verhältnisses der Summe der Bewertungskoeffizienten, die dem jeweiligen autonomen Fahrszenario entsprechen, zur Bewertungskoeffizient-Gesamtheit als das Gewicht, das dem jeweiligen autonomen Fahrszenario entspricht.

9. Verfahren nach einem der Ansprüche 1-8, wobei das Erfassen von Erfahrungsbewertungsdaten in einem Prozess, während dessen ein Fahrzeug eine Teststrecke entlang fährt, Folgendes umfasst:
Senden eines Bewertungsfaktors, der einem jeweiligen autonomen Fahrszenario entspricht, an mehrere Erfahrungsbewertungsendgeräte und
Empfangen von Erfahrungsbewertungsdaten, die dem jeweiligen autonomen Fahrszenario entsprechen, wobei die Erfahrungsbewertungsdaten auf Basis des Bewertungsfaktors in dem Prozess, während dessen das Fahrzeug die Teststrecke entlang fährt, gesammelt werden und durch die mehreren Erfahrungsbewertungsendgeräte übermittelt werden.

10. Verfahren nach einem der Ansprüche 1-8, wobei nach dem Bestimmen eines Straßentestergebnisses des Fahrzeugs gemäß dem ersten Testergebnis und dem zweiten Testergebnis des Fahrzeugs ferner umfassend:
Erfassen (S210) gemäß einer aktuellen Version eines autonomen Fahrsystems des Fahrzeugs eines Straßentestergebnisses des Fahrzeugs, wenn eine vorherige Version des autonomen Fahrsystems eingesetzt wird, und
Vergleichen (S211) von Straßentestergebnissen des Fahrzeugs, wenn die vorherige Version und die aktuelle Version des autonomen Fahrsystems eingesetzt werden, und Anzeigen eines Vergleichsergebnisses.

11. Straßentestvorrichtung für ein autonom fahrendes Fahrzeug, umfassend:
ein Straßentestdaten-Verarbeitungsmodul (301), das konfiguriert ist, um autonome Fahrszenarien, Informationen von Testparametern, die den autonomen Fahrszenarien entsprechen, und Erfahrungsbewertungsdaten in einem Prozess, während dessen ein Fahrzeug eine Teststrecke entlang fährt, zu erfassen, wobei unterschiedliche autonome Fahrszenarien unterschiedlichen Testparametern entsprechen, wobei das Fahrzeug mit einem Bewertungspersonal beladen ist und die Erfahrungsbewertungsdaten subjektive Bewertungsdaten sind, die durch das Bewertungspersonal auf Basis einer Fahrerfahrung in dem Prozess, während dessen das Fahrzeug die Teststrecke entlang fährt, übermittelt werden, wobei die Erfahrungsbewertungsdaten Bewertungsdaten zu Bewältigungsfähigkeiten, die den autonomen Fahrszenarien entsprechen, in einem Fahrprozess des Fahrzeugs sind,
ein objektives Testmodul (302), das konfiguriert ist, um die Informationen der Testparameter, die den autonomen Fahrszenarien entsprechen, gemäß Bewertungsbasislinien, die den autonomen Fahrszenarien entsprechen, zu analysieren, um ein erstes Testergebnis des Fahrzeugs zu bestimmen,
ein subjektives Testmodul (303), das konfiguriert ist, um ein zweites Testergebnis gemäß den Erfahrungsbewertungsdaten zu generieren, und
ein umfassendes Testmodul (304), das konfiguriert ist, um ein Straßentestergebnis des Fahrzeugs gemäß dem ersten Testergebnis und dem zweiten Testergebnis des Fahrzeugs zu bestimmen.

12. Vorrichtung nach Anspruch 11, wobei das Straßentestdaten-Verarbeitungsmodul (301) ferner zu Folgendem konfiguriert ist:
Erfassen von Straßentestfahrdaten in dem Prozess, während dessen das Fahrzeug die Teststrecke entlang fährt,
Analysieren der Straßentestfahrdaten oder der Straßentestfahrdaten und Fahrzeugumgebungsinformationen, um autonome Fahrszenarien zu identifizieren, die in dem Prozess auftreten, während dessen das Fahrzeug die Teststrecke entlang fährt, und
Erfassen der Informationen der Testparameter, die den autonomen Fahrszenarien entsprechen,
wobei die Fahrzeugumgebungsinformationen eines oder mehreres des Folgenden umfassen:
einen Abstand zwischen dem Fahrzeug und einem vorausfahrenden Fahrzeug, Informationen einer Fahrspur, auf der das Fahrzeug fährt, Kreuzungsinformationen einer Kreuzung, zu der das Fahrzeug fährt, Informationen des Verkehrs um das Fahrzeug herum.

13. Vorrichtung nach Anspruch 12, wobei
das Straßentestdaten-Verarbeitungsmodul (301) ferner zu Folgendem konfiguriert ist:
Analysieren von Fahrzeugsteuerinformationen in den Straßentestfahrdaten und
Bestimmen, dass eines der autonomen Fahrszenarien in dem Prozess auftritt, während dessen das Fahrzeug die Teststrecke entlang fährt, wenn die Fahrzeugsteuerinformationen Steuerinformationen beinhalten, die dem einen der autonomen Fahrszenarien entsprechen,
oder das Straßentestdaten-Verarbeitungsmodul (301) ferner zu Folgendem konfiguriert ist:
Analysieren der Straßentestfahrdaten und der Fahrzeugumgebungsinformationen, um eine Verhaltenseigenschaft des Fahrzeugs zu erfassen, und
Bestimmen gemäß der Verhaltenseigenschaft des Fahrzeugs, dass eines der autonomen Fahrszenarien in dem Prozess auftritt, während dessen das Fahrzeug die Teststrecke entlang fährt, wenn das Fahrzeug eine Verhaltenseigenschaft des einen des autonomen Fahrszenarios aufweist.

14. Vorrichtung nach Anspruch 11, wobei die Informationen der Testparameter, die den autonomen Fahrszenarien entsprechen, Istwerte der Testparameter umfassen, die den autonomen Fahrszenarien entsprechen, die Bewertungsbasislinien, die den autonomen Fahrszenarien entsprechen, Basislinienbereiche der Testparameter umfassen, die den autonomen Fahrszenarien entsprechen, und das objektive Testmodul (302) ferner zu Folgendem konfiguriert ist:
Bestimmen von Testparametern, deren Istwerte innerhalb von entsprechenden Basislinienbereichen liegen, gemäß den Istwerten der Testparameter, die den autonomen Fahrszenarien entsprechen, und den Basislinienbereichen der Testparameter, die den autonomen Fahrszenarien entsprechen, und
Bestimmen einer Summe von Bewertungswerten, die den Testparametern entsprechen, deren Istwerte innerhalb von entsprechenden Basislinienbereichen liegen, als das erste Testergebnis des Fahrzeugs,
wobei jeder der Testparameter, die jedem der autonomen Fahrszenarien entsprechen, einem Bewertungswert entspricht.

15. Vorrichtung nach Anspruch 11, wobei das subjektive Testmodul (303) ferner zu Folgendem konfiguriert ist:
Berechnen von quantitativen Erfahrungsinformationen, die den autonomen Fahrszenarien entsprechen, gemäß Erfahrungsbewertungsdaten, die den autonomen Fahrszenarien entsprechen, in dem Prozess, während dessen das Fahrzeug die Teststrecke entlang fährt, und
Bestimmen des zweiten Testergebnisses gemäß den quantitativen Erfahrungsinformationen, die den autonomen Fahrszenarien entsprechen, und Gewichten, die den autonomen Fahrszenarien entsprechen.

16. Elektronische Vorrichtung, umfassend:
mindestens einen Prozessor und
einen Speicher, der kommunikativ mit dem mindestens einen Prozessor verbunden ist, wobei
der Speicher darauf Anweisungen speichert, die durch den mindestens einen Prozessor ausführbar sind, und die Anweisungen, wenn sie durch den mindestens einen Prozessor ausgeführt werden, den mindestens einen Prozessor dazu veranlassen, das Verfahren nach einem der Ansprüche 1-10 zu implementieren.

17. Computerprogrammprodukt, umfassend ein Computerprogramm, das, wenn es durch einen Prozessor ausgeführt wird, das Verfahren nach einem der Ansprüche 1-10 implementiert.

## Revendications

1. Procédé d'essai routier pour un véhicule à conduite autonome, comprenant :
l'acquisition (S101) de scénarios de conduite autonome, d'informations de paramètres d'essai correspondant aux scénarios de conduite autonome et de données d'évaluation d'expérience dans un processus durant lequel un véhicule est en train de se déplacer le long d'une route d'essai, dans lequel différents scénarios de conduite autonome correspondent à différents paramètres d'essai, dans lequel le véhicule est chargé avec un personnel d'évaluation, et les données d'évaluation d'expérience sont des données d'évaluation subjective qui sont remises par le personnel d'évaluation sur la base d'une expérience de déplacement dans le processus durant lequel le véhicule est en train de se déplacer le long de la route d'essai, dans lequel les données d'évaluation d'expérience sont des données d'évaluation sur des capacités d'adaptation correspondant aux scénarios de conduite autonome dans un processus de déplacement du véhicule ;
l'analyse (S102, S204) des informations des paramètres d'essai correspondant aux scénarios de conduite autonome selon des bases de référence d'évaluation correspondant aux scénarios de conduite autonome, pour déterminer un premier résultat d'essai du véhicule ;
la génération (S103) d'un second résultat d'essai selon les données d'évaluation d'expérience ; et
la détermination (S104, S209) d'un résultat d'essai routier du véhicule selon le premier résultat d'essai et le second résultat d'essai du véhicule.

2. Procédé selon la revendication 1, dans lequel l'acquisition de scénarios de conduite autonome, d'informations de paramètres d'essai correspondant aux scénarios de conduite autonome dans un processus durant lequel un véhicule est en train de se déplacer le long d'une route d'essai comprend :
l'acquisition (S201) de données de déplacement d'essai routier dans le processus durant lequel le véhicule est en train de se déplacer le long de la route d'essai ;
l'analyse (S202) des données de déplacement d'essai routier, ou des données de déplacement d'essai routier et d'informations d'environnements de véhicule pour identifier des scénarios de conduite autonome qui surviennent dans le processus durant lequel le véhicule est en train de se déplacer le long de la route d'essai ; et
l'acquisition (S203) des informations des paramètres d'essai correspondant aux scénarios de conduite autonome ;
dans lequel les informations d'environnements de véhicule comprennent un ou plusieurs de ce qui suit :
une distance entre le véhicule et un véhicule devant, des informations d'une voie sur laquelle le véhicule est en train de se déplacer, des informations d'intersection d'une intersection vers laquelle le véhicule est en train de se déplacer, des informations de circulation autour du véhicule.

3. Procédé selon la revendication 2, dans lequel l'analyse (S202) des données de déplacement d'essai routier, ou des données de déplacement d'essai routier et des informations d'environnements de véhicule pour identifier des scénarios de conduite autonome qui surviennent dans le processus durant lequel le véhicule est en train de se déplacer le long de la route d'essai comprend :
l'analyse d'informations de commande de véhicule dans les données de déplacement d'essai routier ; et
la détermination qu'un des scénarios de conduite autonome survient dans le processus durant lequel le véhicule est en train de se déplacer le long de la route d'essai, si les informations de commande de véhicule incluent des informations de commande correspondant à l'un des scénarios de conduite autonome ;
ou,
l'analyse des données de déplacement d'essai routier et des informations d'environnements de véhicule pour acquérir une caractéristique de comportement du véhicule ; et
la détermination, selon la caractéristique de comportement du véhicule, qu'un des scénarios de conduite autonome survient dans le processus durant lequel le véhicule est en train de se déplacer le long de la route d'essai si le véhicule a une caractéristique de comportement de l'un des scénarios de conduite autonome.

4. Procédé selon la revendication 2, dans lequel l'acquisition de scénarios de conduite autonome et d'informations de paramètres d'essai correspondant aux scénarios de conduite autonome dans un processus durant lequel un véhicule est en train de se déplacer le long d'une route d'essai comprend :
la détermination d'instants de survenue des scénarios de conduite autonome ; et
l'acquisition, à partir des données de déplacement d'essai routier et des informations d'environnements de véhicule, de valeurs réelles des paramètres d'essai correspondant aux scénarios de conduite autonome aux instants de survenue.

5. Procédé selon la revendication 1, dans lequel, les informations des paramètres d'essai correspondant aux scénarios de conduite autonome comprennent des valeurs réelles des paramètres d'essai correspondant aux scénarios de conduite autonome, les bases de référence d'évaluation correspondant aux scénarios de conduite autonome comprennent des gammes de bases de référence des paramètres d'essai correspondant aux scénarios de conduite autonome ; et
l'analyse (S102, S204) des informations des paramètres d'essai correspondant aux scénarios de conduite autonome selon des bases de référence d'évaluation correspondant aux scénarios de conduite autonome, pour déterminer un premier résultat d'essai du véhicule comprend :
la détermination de paramètres d'essai dont des valeurs réelles sont au sein de gammes de bases de référence correspondantes selon les valeurs réelles des paramètres d'essai correspondant aux scénarios de conduite autonome et les gammes de bases de référence des paramètres d'essai correspondant aux scénarios de conduite autonome ; et
la détermination d'une somme de valeurs d'évaluation correspondant aux paramètres d'essai dont des valeurs réelles sont au sein de gammes de bases de référence correspondantes en tant que premier résultat d'essai du véhicule ;
dans lequel chacun des paramètres d'essai correspondant à chacun des scénarios de conduite autonome correspond à une valeur d'évaluation.

6. Procédé selon la revendication 1, dans lequel la génération (S103) d'un second résultat d'essai selon les données d'évaluation d'expérience comprend :
le calcul (S206) d'informations d'expérience quantitatives correspondant aux scénarios de conduite autonome selon des données d'évaluation d'expérience correspondant aux scénarios de conduite autonome dans le processus durant lequel le véhicule est en train de se déplacer le long de la route d'essai ; et
la détermination (S208) du second résultat d'essai selon les informations d'expérience quantitatives correspondant aux scénarios de conduite autonome et des poids correspondant aux scénarios de conduite autonome.

7. Procédé selon la revendication 6, dans lequel le calcul (S206) d'informations d'expérience quantitatives correspondant aux scénarios de conduite autonome selon des données d'évaluation d'expérience correspondant aux scénarios de conduite autonome dans le processus durant lequel le véhicule est en train de se déplacer le long de la route d'essai comprend :
concernant l'un quelconque des scénarios de conduite autonome, des données d'évaluation d'expérience correspondant à l'un quelconque des scénarios de conduite autonome comprennent des niveaux d'évaluation correspondant à l'un quelconque des scénarios de conduite autonome, dans lequel différents niveaux d'évaluation correspondent à différentes informations quantitatives ;
la détermination d'un compte d'évaluation total pour lequel une évaluation d'expérience est réalisée en ce qui concerne l'un quelconque des scénarios de conduite autonome et d'un compte d'évaluation d'un niveau d'évaluation respectif correspondant à l'un quelconque des scénarios de conduite autonome, selon les niveaux d'évaluation correspondant à l'un quelconque des scénarios de conduite autonome ;
la détermination d'un rapport du compte d'évaluation du niveau d'évaluation respectif correspondant à l'un quelconque des scénarios de conduite autonome par rapport au compte d'évaluation total en tant que poids d'évaluation du niveau d'évaluation respectif correspondant à l'un quelconque des scénarios de conduite autonome ; et
le calcul d'une somme pondérée d'informations quantitatives des niveaux d'évaluation sur la base des poids d'évaluation des niveaux d'évaluation correspondant à l'un quelconque des scénarios de conduite autonome, pour obtenir des informations d'expérience quantitatives correspondant à l'un quelconque des scénarios de conduite autonome.

8. Procédé selon la revendication 6, dans lequel, avant la détermination du second résultat d'essai selon les informations d'expérience quantitatives correspondant aux scénarios de conduite autonome et des poids correspondant aux scénarios de conduite autonome, le procédé comprend en outre :
l'acquisition de multiples coefficients d'évaluation correspondant à un scénario de conduite autonome respectif, dans lequel les coefficients d'évaluation sont utilisés pour évaluer un niveau auquel le scénario de conduite autonome respectif influence une expérience de conduite du véhicule ;
le calcul, selon les coefficients d'évaluation correspondant aux scénarios de conduite autonome, d'une totalité de coefficients d'évaluation correspondant à la totalité des scénarios de conduite autonome, et d'une somme de coefficients d'évaluation correspondant au scénario de conduite autonome respectif ; et
la détermination d'un rapport de la somme des coefficients d'évaluation correspondant au scénario de conduite autonome respectif par rapport à la totalité de coefficients d'évaluation, en tant que poids correspondant au scénario de conduite autonome respectif.

9. Procédé selon l'une quelconque des revendications 1 à 8, dans lequel, l'acquisition de données d'évaluation d'expérience dans un processus durant lequel un véhicule est en train de se déplacer le long d'une route d'essai comprend :
l'envoi d'un facteur d'évaluation, correspondant à un scénario de conduite autonome respectif, à de multiples terminaux d'évaluation d'expérience ; et
la réception de données d'évaluation d'expérience correspondant au scénario de conduite autonome respectif, les données d'évaluation d'expérience étant collectées sur la base du facteur d'évaluation dans le processus durant lequel le véhicule est en train de se déplacer le long de la route d'essai et remises par les multiples terminaux d'évaluation d'expérience.

10. Procédé selon l'une quelconque des revendications 1 à 8, dans lequel, après la détermination d'un résultat d'essai routier du véhicule selon le premier résultat d'essai et le second résultat d'essai du véhicule, le procédé comprend en outre :
l'acquisition (S210), selon une version actuelle d'un système de conduite autonome du véhicule, d'un résultat d'essai routier du véhicule lorsqu'une version précédente du système de conduite autonome est employée ; et
la comparaison (S211) de résultats d'essai routier du véhicule lorsque la version précédente et la version actuelle du système de conduite autonome sont employées, et l'affichage d'un résultat de comparaison.

11. Appareil d'essai routier pour un véhicule à conduite autonome, comprenant :
un module de traitement de données d'essai routier (301), configuré pour acquérir des scénarios de conduite autonome, des informations de paramètres d'essai correspondant aux scénarios de conduite autonome et des données d'évaluation d'expérience dans un processus durant lequel un véhicule est en train de se déplacer le long d'une route d'essai, dans lequel différents scénarios de conduite autonome correspondent à différents paramètres d'essai, dans lequel le véhicule est chargé avec un personnel d'évaluation, et les données d'évaluation d'expérience sont des données d'évaluation subjective qui sont remises par le personnel d'évaluation sur la base d'une expérience de déplacement dans le processus durant lequel le véhicule est en train de se déplacer le long de la route d'essai, dans lequel les données d'évaluation d'expérience sont des données d'évaluation sur des capacités d'adaptation correspondant aux scénarios de conduite autonome dans un processus de déplacement du véhicule ;
un module d'essai objectif (302), configuré pour analyser les informations des paramètres d'essai correspondant aux scénarios de conduite autonome selon des bases de référence d'évaluation correspondant aux scénarios de conduite autonome, pour déterminer un premier résultat d'essai du véhicule ;
un module d'essai subjectif (303), configuré pour générer un second résultat d'essai selon les données d'évaluation d'expérience ; et
un module d'essai complet (304), configuré pour déterminer un résultat d'essai routier du véhicule selon le premier résultat d'essai et le second résultat d'essai du véhicule.

12. Appareil selon la revendication 11, dans lequel le module de traitement de données d'essai routier (301) est en outre configuré pour :
acquérir des données de déplacement d'essai routier dans le processus durant lequel le véhicule est en train de se déplacer le long de la route d'essai ;
analyser les données de déplacement d'essai routier, ou les données de déplacement d'essai routier et des informations d'environnements de véhicule pour identifier des scénarios de conduite autonome qui surviennent dans le processus durant lequel le véhicule est en train de se déplacer le long de la route d'essai ; et
acquérir les informations des paramètres d'essai correspondant aux scénarios de conduite autonome ;
dans lequel les informations d'environnements de véhicule comprennent un ou plusieurs de ce qui suit :
une distance entre le véhicule et un véhicule devant, des informations d'une voie sur laquelle le véhicule est en train de se déplacer, des informations d'intersection d'une intersection vers laquelle le véhicule est en train de se déplacer, des informations de circulation autour du véhicule.

13. Appareil selon la revendication 12, dans lequel,
le module de traitement de données d'essai routier (301) est en outre configuré pour :
analyser des informations de commande de véhicule dans les données de déplacement d'essai routier ; et
déterminer qu'un des scénarios de conduite autonome survient dans le processus durant lequel le véhicule est en train de se déplacer le long de la route d'essai, si les informations de commande de véhicule incluent des informations de commande correspondant à l'un quelconque des scénarios de conduite autonome ;
ou, le module de traitement de données d'essai routier (301) est en outre configuré pour :
analyser les données de déplacement d'essai routier et les informations d'environnements de véhicule pour acquérir une caractéristique de comportement du véhicule ; et
déterminer, selon la caractéristique de comportement du véhicule, qu'un des scénarios de conduite autonome survient dans le processus durant lequel le véhicule est en train de se déplacer le long de la route d'essai si le véhicule a une caractéristique de comportement de l'un des scénarios de conduite autonome.

14. Appareil selon la revendication 11, dans lequel, les informations des paramètres d'essai correspondant aux scénarios de conduite autonome comprennent des valeurs réelles des paramètres d'essai correspondant aux scénarios de conduite autonome, les bases de référence d'évaluation correspondant aux scénarios de conduite autonome comprennent des gammes de bases de référence des paramètres d'essai correspondant aux scénarios de conduite autonome ; et le module d'essai objectif (302) est en outre configuré pour :
déterminer des paramètres d'essai dont des valeurs réelles sont au sein de gammes de bases de référence correspondantes selon les valeurs réelles des paramètres d'essai correspondant aux scénarios de conduite autonome et les gammes de bases de référence des paramètres d'essai correspondant aux scénarios de conduite autonome ; et
déterminer une somme de valeurs d'évaluation correspondant aux paramètres d'essai dont des valeurs réelles sont au sein de gammes de bases de référence correspondantes en tant que premier résultat d'essai du véhicule ;
dans lequel chacun des paramètres d'essai correspondant à chacun des scénarios de conduite autonome correspond à une valeur d'évaluation.

15. Appareil selon la revendication 11, dans lequel le module d'essai subjectif (303) est en outre configuré pour :
calculer des informations d'expérience quantitatives correspondant aux scénarios de conduite autonome selon des données d'évaluation d'expérience correspondant aux scénarios de conduite autonome dans le processus durant lequel le véhicule est en train de se déplacer le long de la route d'essai ; et
déterminer le second résultat d'essai selon les informations d'expérience quantitatives correspondant aux scénarios de conduite autonome et des poids correspondant aux scénarios de conduite autonome.

16. Dispositif électronique, comprenant :
au moins un processeur ; et
une mémoire connectée en communication à l'au moins un processeur ; dans lequel
la mémoire stocke sur celle-ci des instructions exécutables par l'au moins un processeur; et les instructions, lorsqu'elles sont exécutées par l'au moins un processeur, font en sorte que l'au moins un processeur mette en oeuvre le procédé selon l'une quelconque des revendications 1 à 10.

17. Produit programme d'ordinateur, comprenant un programme d'ordinateur qui, lorsqu'il est exécuté par un processeur, met en oeuvre le procédé selon l'une quelconque des revendications 1 à 10.
